# EUROPEAN PATENT APPLICATION

(11) **EP 4 503 292 A1**
(43) Date of publication of application: **05.02.2025**
(21) Application number: 23891853.6
(22) Date of filing: 24.10.2023
(51) Int. Cl.: H01M 50/296, H01M 50/211, H01M 50/503, H01M 50/567, H01M 50/367, H01M 10/6568, H01M 10/613

(54) **BATTERY MODULE AND BATTERY PACK COMPRISING SAME**

(30) Priority: 16.11.2022 KR 20220153757
(71) Applicant: LG Energy Solution, Ltd., Seoul 07335 (KR)
(72) Inventor: LEE, Jung Hoon, Daejeon 34122 (KR); UM, Taeki, Daejeon 34122 (KR); KIM, Dooseung, Daejeon 34122 (KR); RYU, Jaeuk, Daejeon 34122 (KR)
(74) Representative: Plasseraud IP
(86) International application number: PCT/KR2023/016523
(87) International publication number: WO 2024/106786

(57) **Abstract**

The battery module according to one embodiment of the present disclosure includes: a first sub-module and a second sub-module which each include a battery cell assembly in which a plurality of battery cells are stacked, and a busbar structure including a busbar electrically connecting the battery cells and a busbar frame covering the battery cell assembly on at least one side, a module housing that simultaneously houses the first sub-module and the second sub-module, and a terminal assembly located in a part of the module housing that overlaps with a module extension part where the first sub-module and the second sub-module face each other.

## Description

### [TECHNICAL FIELD]

### Cross Citation with Related Application(s)

This application claims priority to and the benefit of Korean Patent Application No. 10-2022-0153757 filed on November 16, 2022 with the Korean Intellectual Property Office, the disclosure of which is hereby incorporated by reference in its entirety.

The present disclosure relates to a battery module and a battery pack including the same, and more particularly, to a battery module having improved energy density, cooling efficiency and safety, and a battery pack including the same.

### [BACKGROUND]

As the technology development of and the demand for mobile devices have increased, the demand for secondary batteries as energy sources has rapidly increased. In particular, a secondary battery has attracted considerable attention as an energy source for power-driven devices, such as an electric bicycle, an electric vehicle, and a hybrid electric vehicle, as well as an energy source for mobile devices, such as a mobile phone, a digital camera, a laptop computer and a wearable device.

In small mobile devices, one, or two, or three battery cells are used per device, while medium- or large-sized devices such as vehicles require high power and large capacity. Therefore, a medium- or large-sized battery module having a plurality of battery cells electrically connected to one another is used.

Meanwhile, when a plurality of battery cells are connected in series or in parallel to configure a battery pack, it is common to configure a battery module composed of at least one battery cell first and then configure a battery pack by using at least one battery module and adding other components.

Since battery cells constituting such a medium- or large-sized battery module are composed of secondary batteries which can be charged and discharged, such a high-output large-capacity secondary battery generates a large amount of heat during a charging and discharging process. In this case, heat generated from multiple battery cells can be added up in a narrow space, so that the temperature can rise more quickly and excessively. In other words, battery modules in which multiple battery cells are stacked and a battery pack equipped with these battery modules can obtain high output, but it is not easy to remove heat generated from the battery cells during charge and discharge. When the heat dissipation of battery cells is not properly performed, deterioration of the battery cells is accelerated, the life is shortened, and the possibility of explosion or ignition increases.

Moreover, in the case of a battery module included in a vehicle battery pack, it is frequently exposed to direct sunlight and may be placed under high-temperature conditions such as summer or desert areas. Further, since multiple battery modules are concentratedly arranged to increase the mileage of the vehicle, a flame or heat generated in any one of the battery modules can easily propagate to an adjacent battery module, which may eventually lead to ignition or explosion of the battery pack itself.

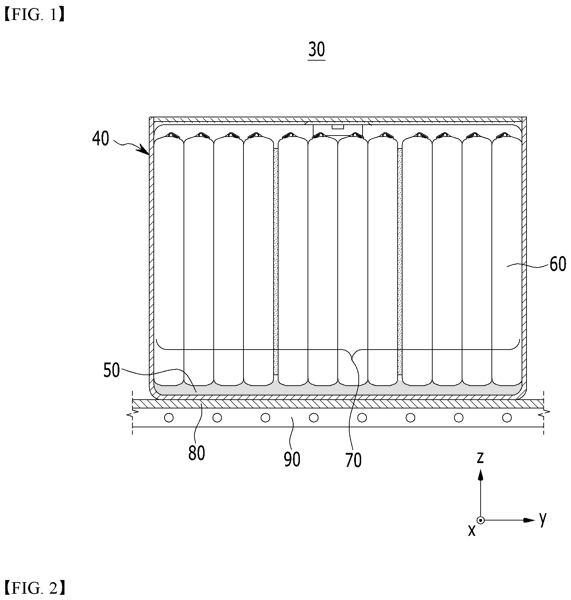

FIG. 1 is a diagram showing a heat discharge path in a conventional battery module.

Referring to FIG. 1, a conventional battery module 30 includes a cell assembly 70 including battery cells 60 stacked in a preset direction, and a module housing 40 that houses the cell assembly 70, wherein the cell assembly 70 is fixedly located on the thermally conductive resin layer 50 located on a lower surface of a module housing 40. In this case, in order to cool down the heat generated in the cell assembly 70, a heat sink 90 facing the bottom of the module housing 40 located in the -z axis direction of FIG. 1 is provided, and a heat conduction pad 80 for heat transfer may be further installed between the heat sink 90 and the bottom of the module housing 40.

However, since the heat sink 90 does not receive heat transfer while being in direct contact with the cell assembly 70, the cooling efficiency is not very high, the cooling path is directed in one direction of the width direction of the battery cell (-z-axis direction), so that a temperature gradient may occur.

Therefore, in order to extend the life of the battery module and/or the battery pack, it is necessary to improve the cooling efficiency of the battery module/battery pack so that the temperature of the battery cell does not increase.

Further, the battery pack is composed of a structure in which a plurality of battery modules are combined, and if a plurality of battery modules are to be loaded on a moving means such as an automobile, the volume becomes large, and the energy density needs to be improved.

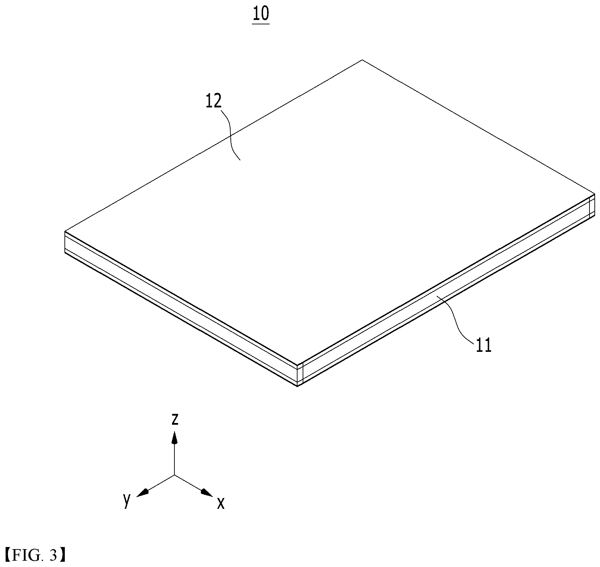

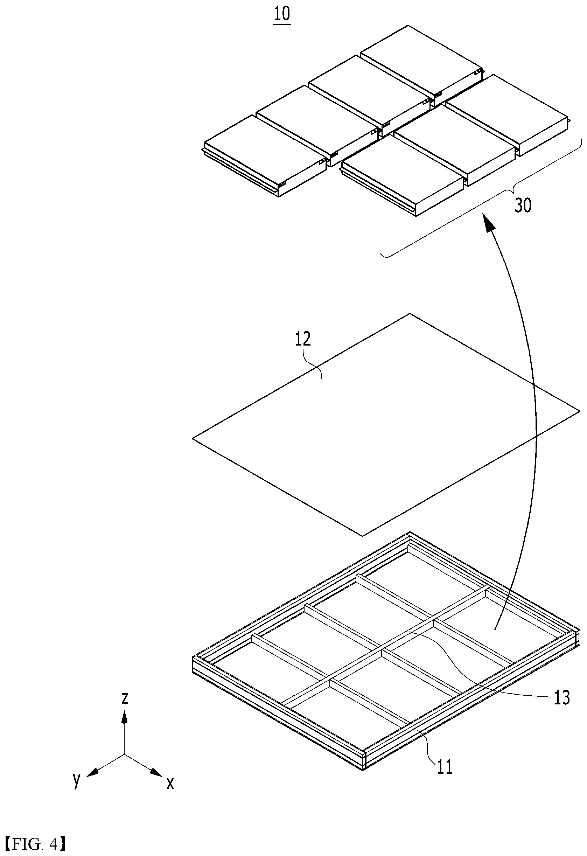

FIG. 2 is a diagram showing a conventional battery pack. FIG. 3 is an exploded perspective view of the battery pack of FIG. 2.

Referring to FIGS. 2 and 3, a conventional battery pack 10 includes a lower pack frame 11 on which a plurality of battery modules 30 are mounted, an upper pack frame 12 located on an upper part of the battery module 30, and an internal beam 13 that partitions the position where the battery module 30 is mounted within the battery pack 10.

When the battery module 30 is mounted within the battery pack 10 in this way, since the energy density of the battery pack 10 may be reduced due to the internal beams 13 that partition between the battery modules 30. Further, if a cooling structure is added to increase the cooling efficiency, a space becomes insufficient, and as a result, a greater number of battery modules 1 must be provided to satisfy the efficiency required for devices, and the like. Furthermore, due to the weight of the battery packs 10, there is a limit to the number of battery packs 10 that can be provided in the device. Therefore, it is necessary to reduce the weight of the battery pack 10 and at the same time, reduce the energy density of the battery pack 10, so that a greater number of battery modules 1 must be mounted within the battery pack 10.

Putting the above together, in order to improve the safety of a battery module and a battery pack, more effective methods for improving the cooling efficiency of the battery module and complementing the reduction in energy density due to cooling structures, internal beams, and the like are needed.

### [DETAILED DESCRIPTION OF THE INVENTION]

### [Technical Problem]

It is an object of the present disclosure to provide a battery module that is improved in cooling efficiency and enhanced in safety and energy density, and a battery pack including the same.

However, the technical problems to be solved by embodiments of the present disclosure are not limited to the above-described problems, and can be variously expanded within the scope of the technical idea included in the present disclosure.

### [Technical Solution]

According to one embodiment of the present disclosure, there is provided a battery module comprising: a first sub-module and a second sub-module which each include a battery cell assembly in which a plurality of battery cells are stacked, and a busbar structure including a busbar electrically connecting the battery cells and a busbar frame covering the battery cell assembly on at least one side, a module housing that simultaneously houses the first sub-module and the second sub-module, and a terminal assembly located in a part of the module housing that overlaps with a module extension part where the first sub-module and the second sub-module face each other.

A step part may be formed in a part of the module housing where the terminal assembly is located.

The terminal assembly may be mounted on the step part.

The terminal assembly may comprise a terminal housing and a terminal busbar mounted on the terminal housing.

The terminal housing is formed with a first hole, the terminal busbar is formed with a second hole, and the step part is formed with a third hole, and the battery module may further comprise a coupling member that passes through the first hole, the second hole and the third hole.

The coupling member is formed of a conductive material, and the internal busbar of the first sub-module or the internal busbar of the second sub-module and the terminal busbar may be electrically connected by the coupling member.

The terminal busbar comprises a first terminal busbar and a second terminal busbar, wherein the first terminal busbar and the second terminal busbar may have different polarities from each other.

The coupling member comprises a first coupling member and a second coupling member, wherein the first coupling member may electrically connect the first terminal busbar and the first internal busbar of the first sub-module, and the second coupling member may electrically connect the second terminal busbar and the second internal busbar of the second sub-module.

The terminal housing may have a bent shape so as to wrap around a side edge of the module housing.

The battery module may further comprise a sealing assembly that covers both open ends of the module housing, respectively.

The sealing assembly comprises a first sealing assembly covering one open end of the module housing, and a second sealing assembly covering the other open end of the module housing, the first sealing assembly may comprise an outlet, which is a hole through which coolant is discharged, and the second sealing assembly may comprise an inlet, which is a hole through which coolant flows in.

The outlet may be located at an upper part than a center part on the basis of the height of the first sealing assembly, and the inlet may be located at a lower part than a center part on the basis of the height of the second sealing assembly.

The coolant is in direct contact with the battery cell assembly and the busbar structure housed inside the module housing, and the coolant may be an insulating oil.

A first sealing member may be interposed along one edge of the sealing assembly coupled with the both open ends of the module housing.

The battery module may comprise a second sealing member interposed in a gap existing in the area excluding an edge of the sealing assembly.

The battery module may comprise a third sealing member interposed along edges of the sealing assembly and the end plate.

The sealing assembly comprises a module venting part provided in one area of the sealing assembly, the module venting part may comprise a venting hole passing through the sealing assembly, a module connection part, which is one hole communicating with the venting hole, a fixing cover provided between the venting hole and the busbar structure and fixed in contact with the inner surface of the sealing assembly, and a membrane provided between the venting hole and the fixing cover, and fixed in contact with the fixing cover.

The module connection part protrudes from the sealing assembly in a direction opposite to the module housing, and the battery module may further comprise a venting protrusion part, which is one area surrounding the module connection part and protruding from the sealing assembly in a direction opposite to the module housing.

The end plate covering the module connection part and the sealing assembly provided with the protrusion part includes a venting opening, and the venting opening is a hole passing through the end plate, and the module connection part and the protrusion part may be located while passing through the venting opening.

The module extension part may comprise a portion where electrode leads are electrically connected to each other in the first sub-module; and a portion where the electrode leads are electrically connected to each other in the second sub-module.

According to another embodiment of the present disclosure, there is provided a battery pack comprising: a plurality of the battery modules, wherein the battery module further comprises a sealing assembly that covers both open ends of the module housing, respectively.

The battery pack further comprises an internal beam arranged between a first battery module and a second battery module that are adjacent to each other in a direction perpendicular to a direction in which the first sub-module and the second sub-module are arranged, wherein the terminal assembly is arranged so as to overlap with the internal beam in a vertical direction.

The terminal assembly may be arranged in the upper space of the internal beam.

The terminal assembly comprises a first terminal assembly located on the first battery module and a second terminal assembly located on the second battery module, and the battery pack may further comprise a connection member that connects the first terminal assembly and the second terminal assembly.

The first terminal assembly and the second terminal assembly each comprises a terminal housing and a terminal busbar mounted on the terminal housing, the first terminal assembly is formed with different terminal busbars from each other, the second terminal assembly is formed with different terminal busbars from each other, and a first terminal busbar of the first terminal assembly and a second terminal busbar of the second terminal assembly are electrically connected through the connection member, and the first terminal busbar and the second terminal busbar may have different polarities from each other.

The battery pack may further comprise a pack venting part connected to the battery module.

The pack venting part may comprise a pack connection part connected to the battery module, a direction adjustment part which is a pipe communicating with the pack connection part, and a discharge port provided in one area of the side surface pack frame and connected to the direction adjustment part.

The direction adjustment part is located inside the side surface pack frame, one end of the direction adjustment part is closed, and the other end of the direction adjustment part is connected to the discharge port, and the pack connection part may be one area protruding from one surface of the direction adjustment part toward the battery module.

The pack connection part may be located while passing through one surface of the side surface pack frame.

The pack connection part is connected to the module connection part of the battery module, and the module connection part may be a hole that communicates with the inside of the battery module.

### [Advantageous Effects]

According to the embodiments, an insulating coolant that can directly cool the battery cells and busbars can be circulated within the battery module to improve the cooling efficiency.

Also, the decrease in energy density caused by the inlet and outlet structure for circulating the insulating coolant within the battery module can be offset by implementing module with lone length.

Further, a terminal assembly can be formed on the side surface of the module housing and the upper space of the internal beam can be utilized to increase space utilization efficiency, thereby improving energy density.

Effects obtainable from the present disclosure are not limited to the effects mentioned above, and additional other effects not mentioned herein will be clearly understood from the description and the appended drawings by those skilled in the art.

### [BRIEF DESCRIPTION OF THE DRAWINGS]

FIG. 1 is a diagram showing a heat discharge path in a conventional battery module.
FIG. 2 is a diagram showing a conventional battery pack.
FIG. 3 is an exploded perspective view of the battery pack of FIG. 2.
FIG. 4 is a perspective view of a battery pack according to an embodiment of the present disclosure.
FIG. 5 is an exploded perspective view of the battery pack of FIG. 4.
FIG. 6 is a plan view showing that a battery module is mounted on the conventional battery pack of FIG. 2.
FIG. 7 is a plan view showing that a battery module is mounted on the battery pack of FIG. 4.
FIG. 8 is a perspective view of a battery module according to an embodiment of the present disclosure.
FIG. 9 is a diagram for explaining before and after mounting of the terminal assembly of FIG. 8.
FIG. 10 is an exploded perspective view of the battery module of FIG. 8.
FIG. 11 is a perspective view of a sub-module constituting a battery module according to an embodiment of the present disclosure.
FIG. 12 is an exploded view of the sub-module of FIG. 11.
FIG. 13 is a perspective view of the battery module excluding the module housing of FIG. 8.
FIG. 14 is a perspective view of the battery module in which a side plate is added to FIG. 13.
FIG. 15 is an exploded perspective view of the battery module of FIG. 14.
FIG. 16 is a diagram showing that FIG. 14 is inserted into a module housing.
FIG. 17 is a diagram showing A1 in FIG. 13.
FIG. 18 is a diagram showing A2 in FIG. 13.
FIG. 19 is a perspective view showing a state in which a plurality of battery modules are electrically connected according to an embodiment of the present disclosure.
FIG. 20 is an enlarged view of an area P in FIG. 19.
FIG. 21 is a diagram showing the electrical connection relationship in the battery module according to the present embodiment.
FIG. 22 is a diagram showing the movement path of current in the battery module.
FIG. 23 is a perspective view showing that the first sealing assembly according to an embodiment of the present disclosure is mounted on one surface of the module housing.
FIG. 24 is a diagram showing the process of assembling the first sealing assembly of FIG. 23. FIG. 24(a) is a diagram showing that the module connector is coupled to the first sealing cover. FIG. 24(b) is a diagram showing that the sensing unit is coupled to the first sealing cover. FIG. 24(c) is a diagram showing that both the module connector and the sensing unit are coupled to the first sealing cover.
FIG. 25 is a diagram showing a process in which the first sealing assembly of FIG. 24 is mounted on one surface of the module housing. FIG. 25(a) is a diagram showing that a sensing cable is electrically connected to a flexible printed circuit board. FIG. 25(b) is a view showing that the first sealing assembly is coupled to the module housing. FIG. 25(c) is a view showing a state in which the first sealing assembly and the module housing are sealed.
FIG. 26 is an exploded perspective view showing that the first end plate is mounted on the first seal assembly according to an embodiment of the present disclosure.
FIG. 27 is a view of the first end plate mounted on the first sealing assembly viewed in the -x-axis direction of FIG. 26.
FIG. 28 is a diagram showing A5 cut along B-B' in FIG. 27.
FIG. 29 is a diagram showing that the second sealing assembly is mounted on the other surface of the module housing according to an embodiment of the present disclosure.
FIG. 30 is an exploded perspective view showing that the second end plate is mounted on the second seal assembly according to an embodiment of the present disclosure.
FIG. 31 is a view of the second end plate mounted on the second sealing assembly viewed in the -x-axis direction of FIG. 30.
FIG. 32 is a view showing A6 cut along C-C' of FIG. 31.
FIG. 33 is an exploded perspective view of a second sealing assembly according to another embodiment of the present disclosure.
FIG. 34 is a diagram when FIG. 33 is viewed in the -y-axis direction.
FIG. 35 is a diagram showing that the second sealing assembly of FIG. 33 is coupled with the second end plate.
FIG. 36 is a perspective view showing the inside of a battery pack according to an embodiment of the present disclosure.
FIG. 37 is a diagram showing a pack venting part according to an embodiment of the present disclosure.
FIG. 38 is a cross-sectional view taken along D-D' of FIG. 36, and
FIG. 39 is a perspective view of FIG. 36 viewed in the -z-axis direction.

### [DETAILED DESCRIPTION OF THE EMBODIMENTS]

Hereinafter, various embodiments of the present disclosure will be described in detail with reference to the accompanying drawings so that those skilled in the art can easily carry out them. The present disclosure may be modified in various different ways, and is not limited to the embodiments set forth herein.

A description of portions that are not related to the description will be omitted for clarity, and same reference numerals designate same or like elements throughout the description.

Further, in the drawings, the size and thickness of each element are arbitrarily illustrated for convenience of description, and the present disclosure is not necessarily limited to those illustrated in the drawings. In the drawings, the thickness of layers, areas, etc. are exaggerated for clarity. In the drawings, for convenience of description, the thicknesses of a part and an area are exaggerated.

Further, throughout the description, when a portion is referred to as "including" or "comprising" a certain component, it means that the portion can further include other components, without excluding the other components, unless otherwise stated.

Further, throughout the description, when referred to as "planar", it means when a target portion is viewed from the upper side, and when it is referred to as "cross-sectional", it means when a target portion is viewed from the side of a cross section cut vertically.

Hereinafter, an electrode assembly according to one embodiment of the present disclosure will be described. However, a partial cross section of the electrode assembly is mainly described, but is not necessarily limited thereto, and other cross sections can also be described in the same or similar manner.

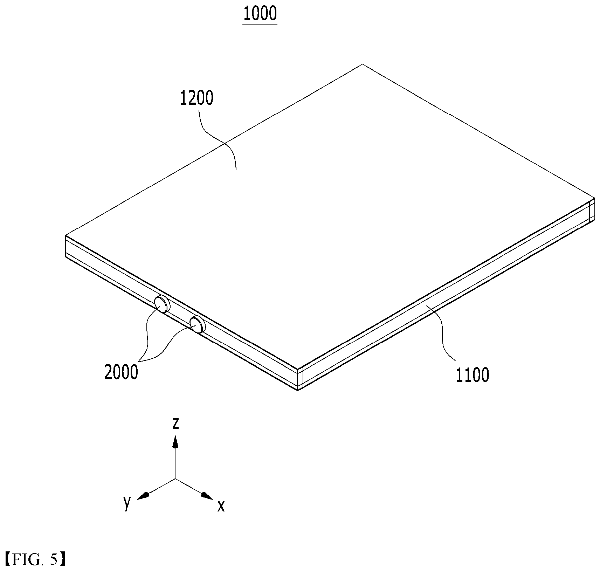

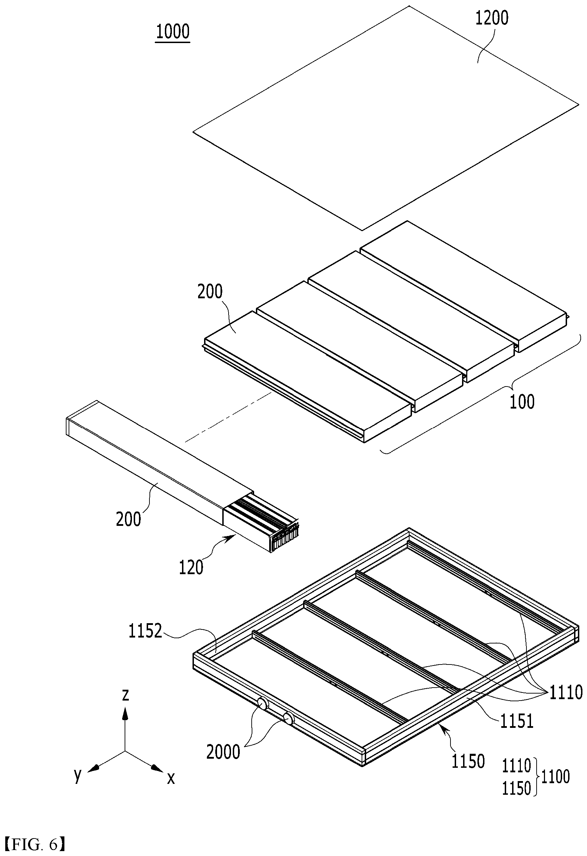

Referring to FIGS. 4 and 5, a battery pack 1000 according to an embodiment of the present disclosure comprises a lower pack frame 1100 on which a plurality of battery modules 100 are mounted, an upper pack frame 1200 located on an upper part of the battery module 100, and at least one pack venting part 2000 provided on the side surface of the lower pack frame 1100. Herein, the lower pack frame 1100 and the upper pack frame 1200 can be coupled with each other by a method such as welding to seal the inside of the battery pack 1000.

The battery module 100 may include a battery cell assembly 120 in which a plurality of battery cells are stacked along a preset direction, and a module housing 200 that houses the battery cell assembly 120. The module housing 200 may be a metal plate-shaped mono-frame in which the upper and lower surfaces (z-axis direction and -z-axis direction) and both side surfaces (y-axis direction and -y-axis direction) are integrated. The battery cell assembly 120 may be mounted inside the module housing 200 to configure the battery module 100. However, the module housing 200 is not limited to the contents described above, and the module housing 200 may include an upper frame and a lower frame.

The lower pack frame 1100 includes a side surface pack frame 1150, and at least two internal beams 1110 formed on the bottom surface of the lower pack frame 1100. Herein, the bottom surface of the lower pack frame 1100 and the at least two internal beams 1110, and the bottom surface of the lower pack frame 1100 and the side surface pack frames 1150 may be coupled with each other by a method such as welding.

The plurality of battery modules 100 may be partitioned from each other by a side surface pack frame 1150 and at least two internal beams 1110. In other words, the plurality of battery modules 100 may be respectively arranged in an area between the internal beams 1110 and the side surface pack frame 1150 and in an area located between internal beams 1110 adjacent to each other. More specifically, in the battery pack 1000, the battery module 100 is arranged between a pair of internal beams 1110 located adjacent to each other among the plurality of internal beams 1110, and the battery module 100 may be arranged between the internal beam 1110 and the side surface pack frame 1150.

Thereby, the plurality of battery modules 100 are also surrounded by at least two internal beams 1110 and the side surface pack frames 1150, so that each battery module 100 can be protected from external impact. The internal beam 1110 can function as a type of rigid beam.

The side surface pack frame 1150 may be arranged at the edge of the bottom surface of the lower pack frame 1100, and extended upward from the bottom surface of the lower pack frame 1100. More specifically, it may be extended upward from each edge of the bottom surface of the lower pack frame 1100. Herein, the upper end of the side surface pack frame 1150 may be in contact with the upper pack frame 1200. At this time, the upper end of the side surface pack frame 1150 and the upper pack frame 1200 can be coupled with each other by a method such as welding to seal the inside of the battery pack 1000.

The plurality of internal beams 1110 may be spaced apart from each other. Herein, the separation distance between internal beams 1110 adjacent to each other may be equal to or larger than the size of the battery module 100.

Further, the end of the internal beam 1110 may be in contact with the inner surface 1152 of the side surface pack frame 1150. More specifically, both ends of the internal beam 1110 may be in contact with the inner surface 1152 of the side surface pack frame 1150, respectively.

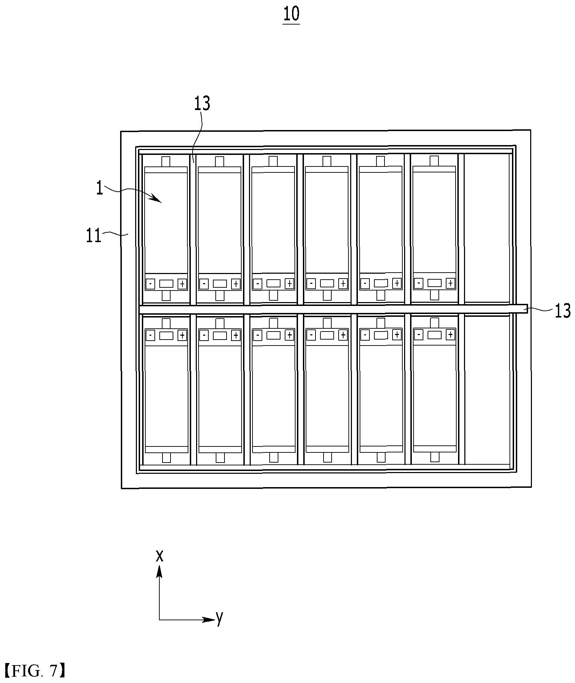

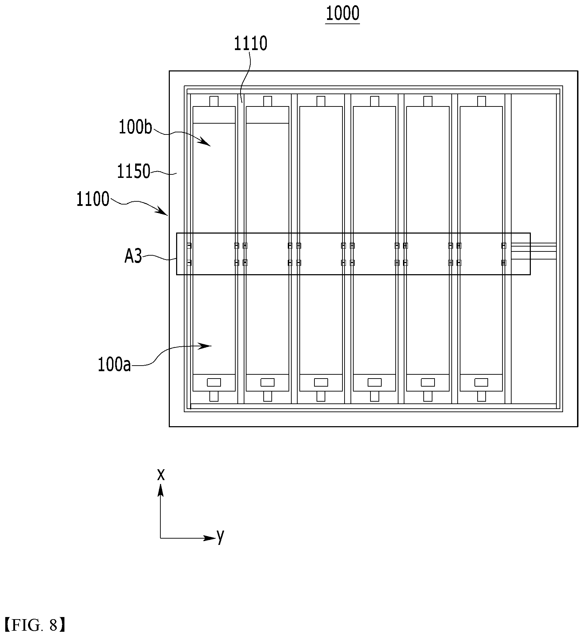

FIG. 6 is a plan view showing that a battery module is mounted on the conventional battery pack of FIG. 2. FIG. 7 is a plan view showing that a battery module is mounted on the battery pack of FIG. 4.

Referring to FIG. 6, the conventional battery pack 10 includes a plurality of battery modules 1 mounted between internal beams 13 that partition the lower pack frame 11. At this time, the internal beams 13 are arranged in the x-axis direction and the y-axis direction to partition the space inside the lower pack frame 11, and a plurality of battery modules 1 can be mounted between the spaces. At this time, one end and the other end of the battery module 1 may be located while being in contact with the inner surface of the lower pack frame 11 and the internal beams 13, or may be located while being slightly spaced apart. That is, the internal beams 13 may be located as shown in FIG. 6, and the weight of the battery pack 10 may increase due to the inclusion of the internal beam 13 extending in the y-axis direction. Thereby, there is a problem that the energy density of the battery pack 10 is low. Therefore, in order to solve the above problem, in the present embodiment, the conventional battery modules 1 can be connected by a plurality of numbers as sub-modules to form one battery module 100 as shown in FIG. 7.

Specifically, referring to FIG. 7, the battery pack 1000 according to an embodiment of the present disclosure includes a plurality of battery modules 100 mounted between the internal beams 1110 that partition the lower pack frame 1100.

As described above, the battery module 100 may be configured to connect two battery modules 1 arranged in the x-axis direction in FIG. 6. In one example, the battery module 100 of the present embodiment can be configured such that respective battery cell assemblies constituting the battery module 1 of FIG. 6 are arranged in a line and housed in one module housing. That is, the two battery cell assemblies constituting the two battery modules 1 of FIG. 6 may be electrically arranged in a line in the longitudinal direction (x-axis direction) to form one battery module 100. Therefore, the battery module 100 of the present embodiment may have a longer length in the x-axis than the conventional battery module 1.

Referring to FIG. 6, in the conventional battery pack 10, the internal beams 13 are arranged along the x-axis and y-axis to partition the space inside the lower pack frame 1100, and a plurality of battery modules 100 may be mounted between the spaces. Whereas, referring to FIG. 7, it can be seen that in the battery pack 1000 according to the present embodiment, the internal beams 1110 are not arranged in the y-axis direction, unlike the conventional battery pack 10. This is to ensure that because the length (x-axis direction) of the battery module 100 is increased compared to the conventional case, one end and the other end in the longitudinal direction (x-axis direction) of the battery module 100 are located in connect with the side surface pack frame 1150 or located while completely filling the space between the pack frame 1150 and the end of the battery module 100, whereby the internal beams 1110 do not need to partition the battery module 100 along a direction (y-axis direction) perpendicular to the longitudinal direction (x-axis direction) of the battery module 100. That is, due to the structure of the above-mentioned battery module 100, the number of internal beams 1110 provided in the battery pack 1000 in the present embodiment is reduced compared to the conventional case, and thus, it can be seen that the weight of the battery pack 1000 decreases and also the energy density increases.

Below, the battery module 100 according to an embodiment of the present disclosure will be described in detail.

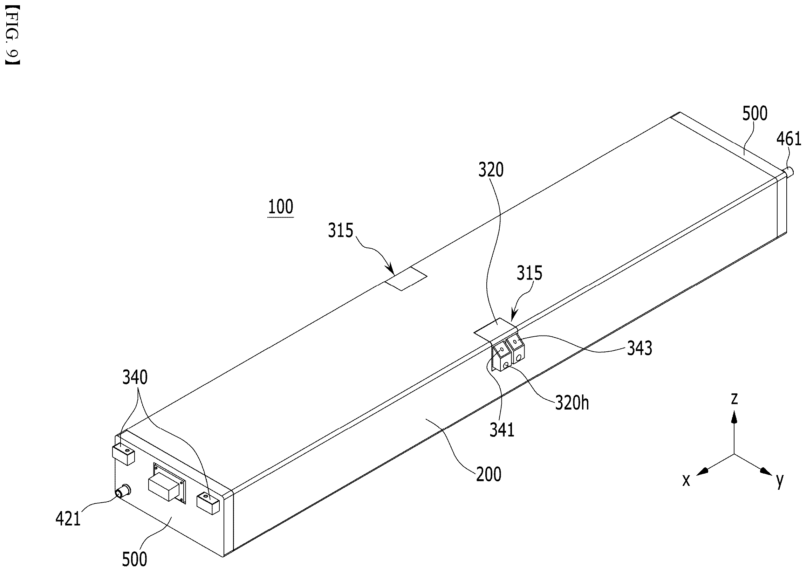

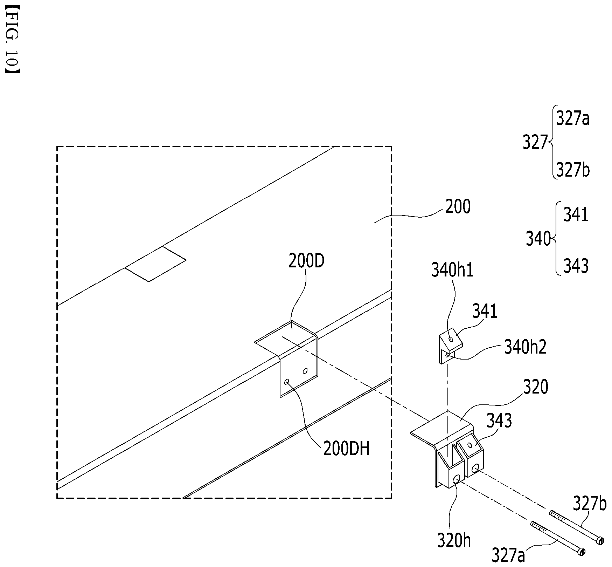

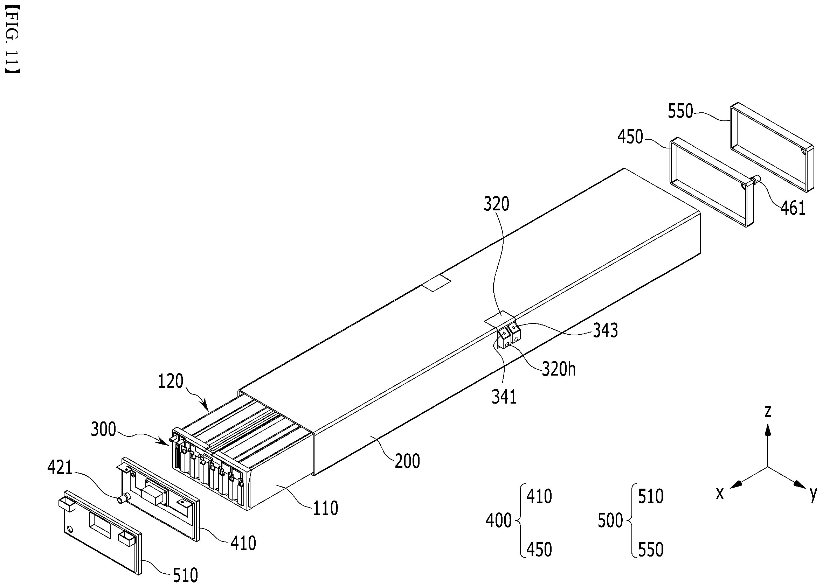

FIG. 8 is a perspective view of a battery module according to an embodiment of the present disclosure. FIG. 9 is a diagram for explaining before and after mounting of the terminal assembly of FIG. 8. FIG. 10 is an exploded perspective view of the battery module of FIG. 8.

Referring to FIGS. 8 to 10, the battery module 100 according to an embodiment of the present disclosure may be one in which a plurality of sub-modules corresponding to a conventional battery module are arranged in a line to form one battery module 100. Specifically, the battery module 100 of the present embodiment may be one in which each battery cell assembly, which constitutes two conventional battery modules, is arranged long in the x-axis direction and simultaneously housed in one module housing 200.

The battery module 100 according to the present embodiment includes a battery cell assembly 120 in which a plurality of battery cells are stacked, a module housing 200 that houses the battery cell assembly 120, a busbar structure 300 located on a front surface and/or a rear surface of the battery cell assembly 120, a sealing assembly 400 that covers a front surface and/or a rear surface of the busbar structure 300, and an end plate 500 that covers a front surface and/or a rear surface of the sealing assembly 400.

First, the battery cell 110 may be a pouch-type battery cell. Such a pouch-type battery cell may be formed by housing an electrode assembly in a pouch case made of a laminate sheet including a resin layer and a metal layer, and then heat-sealing the sealing part of the pouch case. At this time, the battery cell 110 may be formed in a rectangular sheet structure.

Such battery cells 110 may be configured in a plurality of numbers, and the plurality of battery cells 110 are stacked so as to be electrically connected to each other, thereby forming a battery cell assembly 120. In particular, as shown in FIGS. 8 and 10, a plurality of battery cells 110 may be stacked along the y-axis direction. As mentioned above, the direction in which the plurality of battery cells 110 are stacked can be defined as the width direction of the battery cell assembly 120.

The module housing 200 can be for protecting the battery cell assembly 120 and the electrical components connected thereto from external physical impacts. The module housing 200 can house the battery cell assembly 120 and electrical components connected thereto in the internal space of the module housing 200.

The structure of the module housing 200 may vary. According to the present embodiment, the structure of the module housing 200 may be a mono frame structure. Herein, the mono frame may be in the form of a metal plate in which the upper surface, the lower surface and the both surfaces are integrated. The mono frame can be manufactured by extrusion molding.

However, the structure of the module housing 200 is not limited thereto, and in another example, the module housing 200 may have a structure in which a U-shaped frame and an upper plate are coupled. In this case, the U-shaped frame may be formed by combining or integrating the lower surface and both side surfaces of the module housing 200. At this time, each frame or plate constituting the U-shaped frame may be manufactured by press molding. Further, the structure of the module housing 200 may be provided in a mono frame or an L-shaped frame structure in addition to a U-shaped frame, and may be provided in various structures that are not described in the above-mentioned examples.

The module housing 200 may be provided in such a shape in which front and rear surfaces are opened along the longitudinal direction (x-axis direction) of the battery cell assembly 120. In this case, the front surface and the rear surface of the battery cell assembly 120 may not be hidden by the module housing 200. The front surface and the rear surface of the battery cell assembly 120 may be hidden by a busbar structure 300, a sealing assembly 400, or an end plate 500, etc., through which the front surface and the rear surface of the battery cell assembly 120 will be protected from external physical impacts or the like.

The busbar structure 300 includes a busbar frame 310 described later, and a busbar 330 mounted on one surface of the busbar frame 310. The busbar structure 300 may be located on the opened first side (x-axis direction) and second side (-x-axis direction) of the module housing 200 to cover the battery cell assembly 120. The busbar structure 300 can electrically connect the battery cells 110 constituting the battery cell assembly 120 in series or in parallel.

The busbar structure 300 may include a busbar frame 310, a busbar 330, and a terminal busbar 340, and the details will be described later.

The sealing assembly 400 may be located on the opened first side (x-axis direction) and second side (-x-axis direction) of the module housing 200 to cover the battery cell assembly 120. The sealing assembly 400 located on the opened first side of the module housing 200 may be the first sealing assembly 410, and the sealing assembly 400 located on the opened second side of the module housing 200 may be a second sealing assembly 450.

The sealing assembly 400 may separate the opened first side and second side of the module housing 200 from the external environment. Specifically, when a coolant is injected into the module housing 200 described later, the sealing assembly 400 may perform the function to seal the coolant so as to prevent it from leaking to the outside.

The sealing assembly 400 may include a sealing cover and an inlet 421 and an outlet 461 through which coolant flows in. Specifically, the coolant may flow into the module housing 200 through the inlet 421, and then be discharged outside the battery module 100 through the outlet 461. The coolant may be in direct contact with the battery cell assembly 120, other electrical components, and the busbar structure 300 mounted inside the module housing 200, and receive transfer of heat generated therefrom.

The coolant may be a fluid. However, the coolant needs to be electrically insulated because it is in direct contact with the battery cell assembly 120, other electrical components, and the busbar structure 300 within the battery module 100. Therefore, the coolant may be a material that has insulating properties. In one example, the coolant may be insulating oil.

As mentioned above, the coolant is in direct contact with the battery cell assembly 120, other electrical components, and the busbar structure 300 that generate heat within the battery module 100, and can directly cool them while receiving transfer of heat. Therefore, as compared to the conventional method of indirectly cooling the battery module using a heat sink, etc., the cooling efficiency can be improved and the battery life can be extended.

Referring to FIGS. 7 and 8, the battery module comprises a terminal assembly 315 located in a part of the module housing 200 that overlaps with a module extension part A3 where the first sub-module 100a and the second sub-module 100b face each other. The module extension part A3 may be located in the center part of the battery module 100 on the basis of the longitudinal direction (x-axis direction). A step part 200D may be formed in a part of the module housing 200 where the terminal assembly 315 is located. The step part 200D may have a structure that is recessed from the outer surface of the module housing 200 toward the inside where the battery cell assembly is housed. At this time, the terminal assembly 315 may be mounted on the step part 200D.

The terminal assembly 315 according to the present embodiment includes a terminal housing 320 and a terminal busbar 340 mounted on the terminal housing 320. The terminal housing 320 may be formed to wrap around a side edge of the module housing 200. At this time, the terminal housing 320 may have a bent shape. Specifically, the terminal housing 320 may be formed to simultaneously wrap around the upper surface and the side surfaces of the module housing 200.

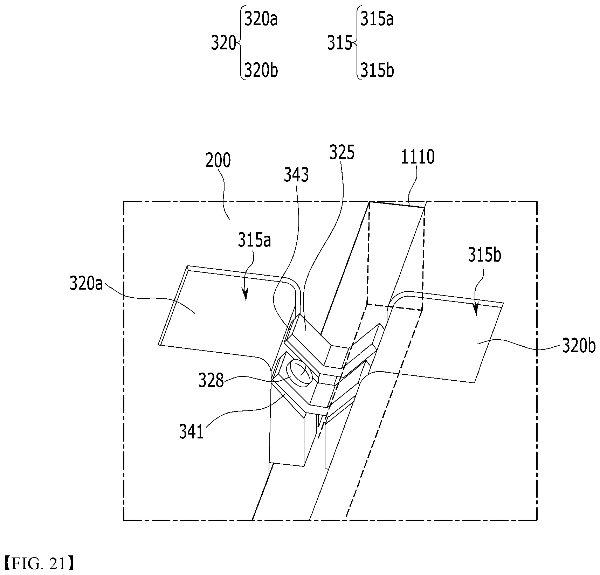

Referring to FIG. 9, the terminal busbar 340 according to the present embodiment includes a first terminal busbar 341 and a second terminal busbar 343, wherein the first terminal busbar 341 and the second terminal busbar 343 may have different polarities from each other. The terminal busbar 340 may be a structure that has a first hole 340h1 formed in the inclined upper part, and a second hole 340h2 formed in the lower part connected to the upper part and extending in the vertical direction (-z-axis direction). The first hole 340h1 and the second hole 340h2 may be areas through which a fixing member 328 (FIG. 20) and a coupling member 327, which will be described later, respectively pass.

The terminal housing 320 according to the present embodiment may be formed with a first hole 320h, the terminal busbar 340 may be formed with a second hole 340h2, and the step part 200D may be formed with a third hole 200DH. Herein, the battery module 100 according to the present embodiment may further include a coupling member 327 that passes through the first hole 320h, the second hole 340h2, and the third hole 200DH.

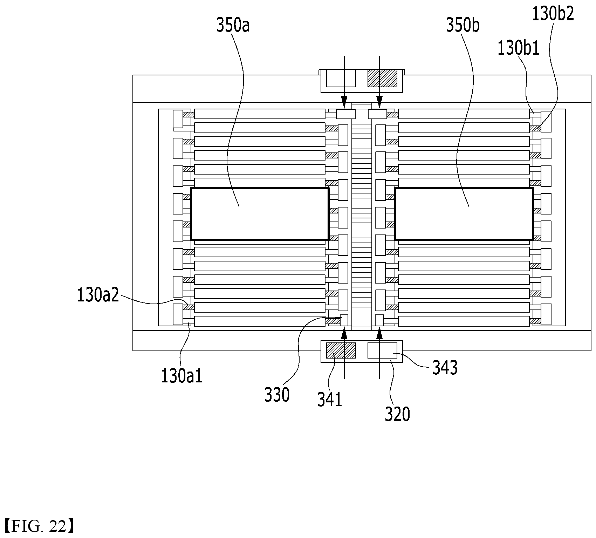

Referring to FIGS. 7 and 9, the coupling member 327 is formed of a conductive material, and the internal busbar 330 (FIG. 21) of the first sub-module 100a or the internal busbar 330 (FIG. 21) of the second sub-module 100b and the terminal busbar 340 may be electrically connected by the coupling member 327. Specifically, the coupling member 327 includes a first coupling member 327a and a second coupling member 327b, wherein the first coupling member 327a may electrically connect the first terminal busbar 341 and the first internal busbar 330 (FIG. 21) of the first sub-module 100a, and the second coupling member 327b may electrically connect the second terminal busbar 343 and the second internal busbar 330 (FIG. 21) of the second sub-module 100b. In one example, the coupling member 327 may be a bolting coupling member.

The end plate 500 may be located on the opened first side (x-axis direction) and second side (-x-axis direction) of the module housing 200 to cover the sealing assembly 400. The end plate 500 located on the opened first side of the module housing 200 may be the first end plate 510, and the end plate 500 located on the opened second side of the module housing 200 may be a second end plate 550.

Such an end plate 500 can physically protect the battery cell assembly 120 and other electrical components from external impact.

Below, each sub-battery module constituting the battery module 100 of the present embodiment will be described in more detail.

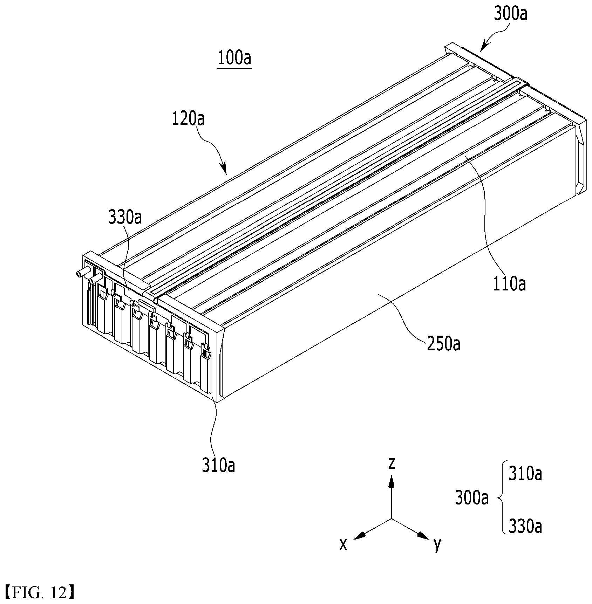

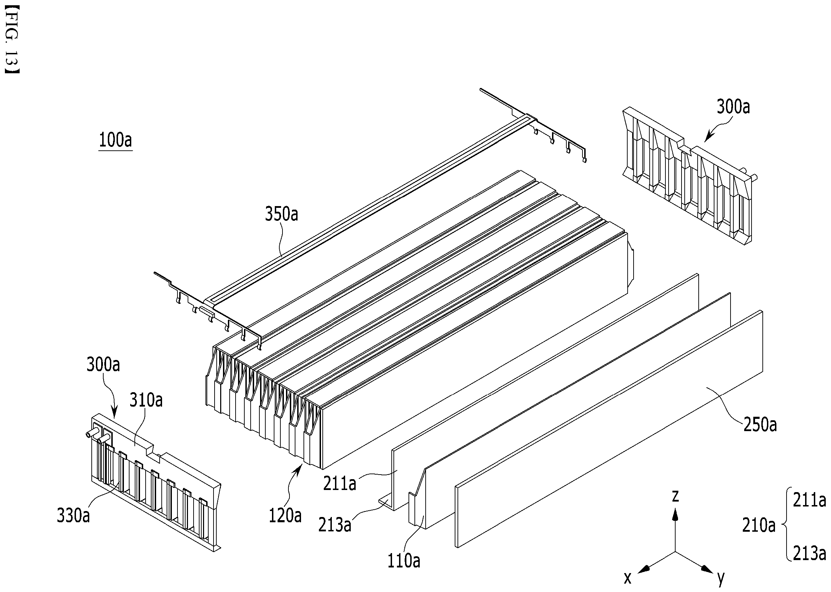

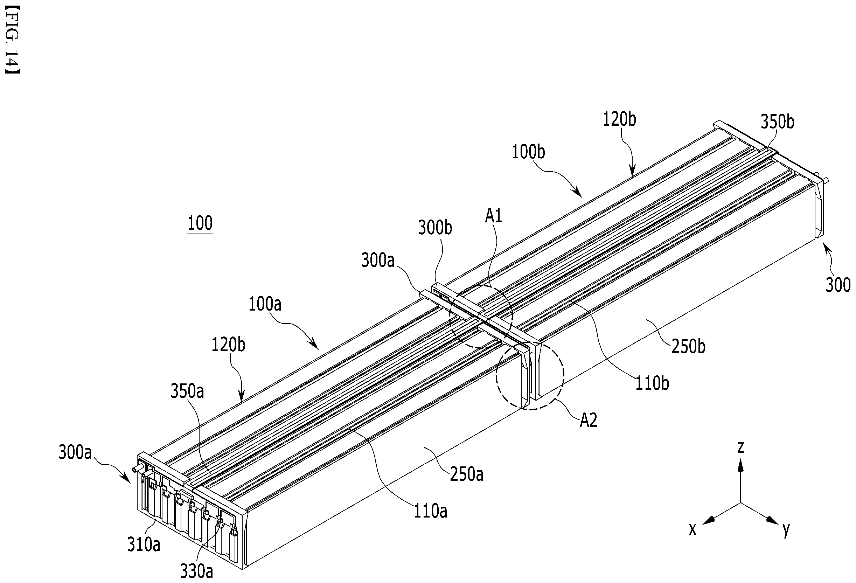

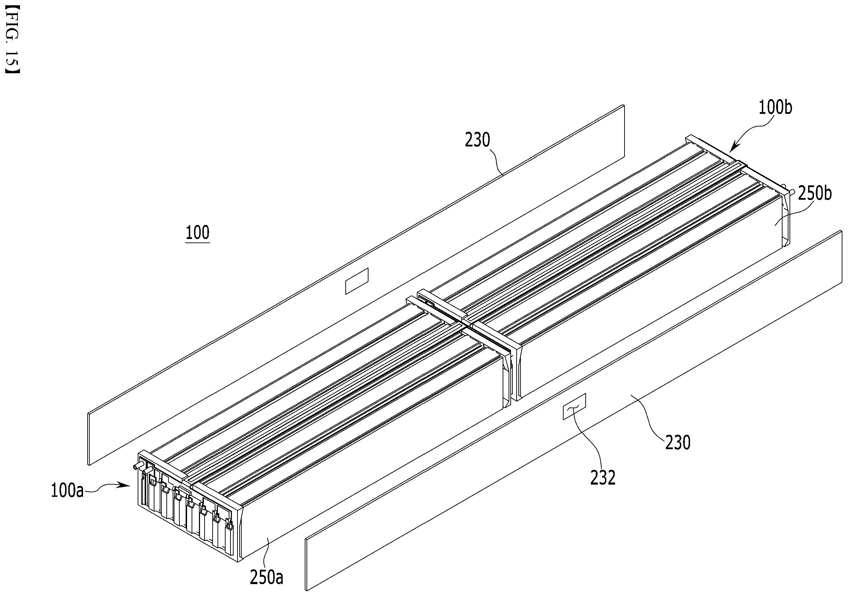

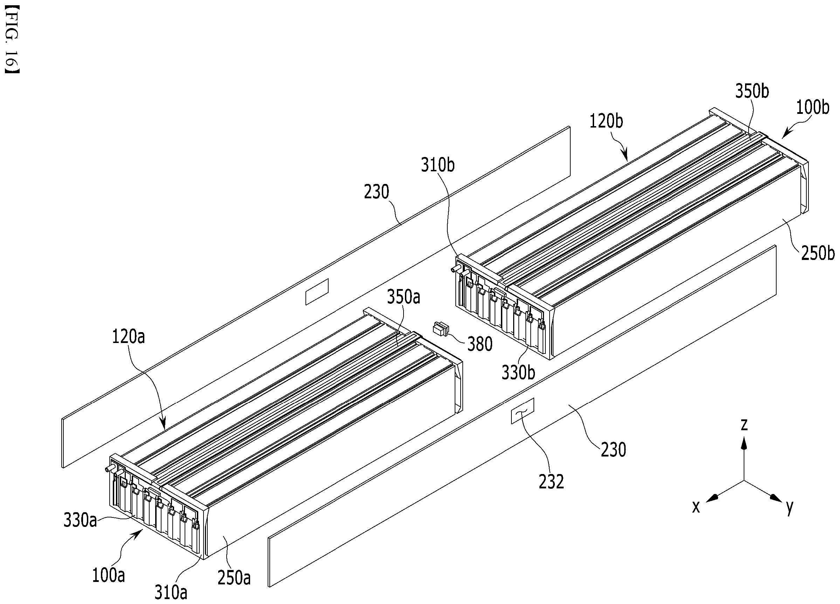

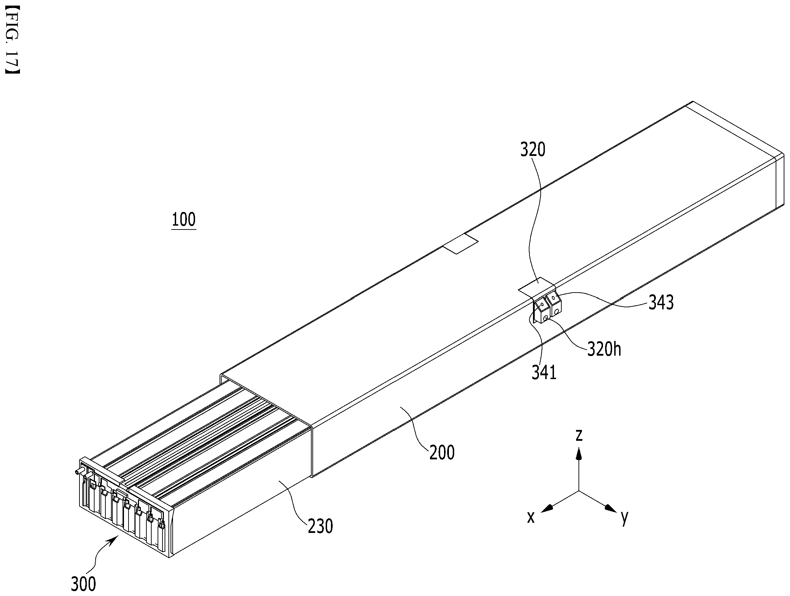

FIG. 11 is a perspective view of a sub-module constituting a battery module according to an embodiment of the present disclosure. FIG. 12 is an exploded view of the sub-module of FIG. 11. FIG. 13 is a perspective view of the battery module excluding the module housing of FIG. 8. FIG. 14 is a perspective view of the battery module in which a side plate is added to FIG. 13. FIG. 15 is an exploded perspective view of the battery module of FIG. 14. FIG. 16 is a diagram showing that FIG. 14 is inserted into a module housing.

Referring to FIGS. 11 to 16, the battery module 100 according to an embodiment of the present disclosure may include a first sub-module 100a and a second sub-module 100b. Specifically, the battery module 100 may be one in which a first sub-module 100a and a second sub-module 100b are arranged in a line along the longitudinal direction (x-axis direction) of the battery cell assembly 120 to form one battery module 100. At this time, the battery cell assemblies 120a and 120b included in each of the first and second sub-modules 100a and 100b may be simultaneously housed in one module housing 200.

The first sub-module 100a and the second sub-module 100b may each include a battery cell assembly 120 in which a plurality of battery cells are stacked, and a busbar structure 300 including a busbar 330 electrically connected to the battery cell assembly 120 and a busbar frame 310 that covers the battery cell assembly 120 on at least one side.

That is, the first sub-module 100a and the second sub-module 100b each include the same configuration, and the first sub-module 100a is mainly described below.

Referring to FIGS. 11 and 12, the first sub-module 100a includes a first battery cell assembly 120a in which a plurality of battery cells 110 are stacked, a first busbar structure 300a that covers the front surface (x-axis direction) and the rear surface (-x-axis direction) of the first battery cell assembly 120a, and a first flexible printed circuit board (FPCB) 350a electrically connected to the first busbar structure 300a.

The first battery cell assembly 120a includes a plurality of first battery cells 110a, a first cooling fin 210a located between the plurality of first battery cells 110a, and a first compression pad 250a provided on one surface of the first outermost battery cell 110a.

The first cooling fin 210a may be located between the plurality of first battery cells 110a. For example, the first cooling fin 210a may be located for every two first battery cells 110a. Specifically, one first cooling fin 210a and the other first cooling fin 210a adjacent thereto may be located with two first battery cells 110a being interposed between them.

The first cooling fin 210a may include a first plate 211a in contact with one side surface of the first battery cell 110a. Herein, one side surface of the first battery cell 110a may be one surface of the battery cell 110 extending along the longitudinal direction (x-axis direction) of the first battery cell 110a.

One surface of the first plate 211a may be in contact with one side surface of the first battery cell 110a facing one surface of the first plate 211a. The other surface of the first plate 211a may be in contact with one surface of the other first battery cell 110a adjacent thereto while facing the other surface of the first plate 211a. In this case, although not illustrated in this figure, an adhesive member is interposed between the side surface of the first battery cell 110a and the first plate 211a, and the first battery cell 110a and the first plate 211a may be adhesively fixed. For example, the adhesive member may be an insulating tape.

The upper surface (z-axis direction) of the first plate 211a may be in contact with the upper surface (z-axis direction) of the module housing 200 of FIG. 15, and the lower surface of the first plate 211a may be in contact with the lower surface (-z-axis direction) of the module housing 200. Therefore, the first cooling fin 210a can be fixedly located within the module housing 200, whereby the first battery cell 110a attached to the first cooling fin 210a can also be fixedly located within the module housing 200.

When the size of the first plate 211a may be larger than the size of the first battery cell 110a, the upper part and the lower part of the first battery cell 110a may be located at a prescribed height from the upper part and the lower part of the module housing 200. Specifically, when the height (z-axis direction) of the first plate 211a is longer than the height (z-axis direction) of the first battery cell 110a, the first battery cell 110a can be adhesively fixed to the first plate 211a while being located at the center part thereof.

The first cooling fin 210a may further include a first plate 211a and a first protrusion part 213a where one end of the first plate 211a protrudes. Specifically, referring to FIG. 12, the first cooling fin 210a may include a first plate 211a having a surface corresponding to or larger than one surface of the first battery cell 110a, and a first protrusion part 213a that protrudes from one end of the first plate 211a to be in parallel to the stacking direction (y-axis direction) of the first battery cell assembly 120a.

The first protrusion part 213a may be one area protruding in a direction perpendicular to the first plate 211a. In one example, the first cooling fin 210a may have an L-shape. The first protrusion part 213a may be in contact with an upper surface and/or a lower surface of the module housing 200. Specifically, one surface of the first protrusion part 213a may be located so as to face the upper part or the lower surface of the first battery cell 110a, and the other surface of the first protrusion part 213a may be in contact with a lower surface or an upper surface of the module housing 200. Consequently, the first cooling fin 210a can be more firmly fixedly located within the module housing 200.

For example, one surface of the first protrusion part 213a may be located facing the first battery cell 110a. That is, one surface of the first protrusion part 213a is located facing the lower part of the first battery cell 110a, and the upper part and the lower part of the first battery cell 110a may be located by being adhesively fixed to the first plate 211a while having a prescribed height from the upper surface and the lower surface of the module housing 200. In other words, a prescribed space may be provided between one surface of the first protrusion part 213a and the lower part of the first battery cell 110a, and between the upper surface of the module housing 200 and the upper part of the first battery cell 110a, so that the coolant described later can move between them. In this case, the distance between one surface of the first protrusion part 213a and the lower part of the first battery cell 110a may correspond to the distance between the upper surface of the module housing 200 and the upper part of the first battery cell 110a.

The other surface of the first protrusion part 213a may be in contact with the bottom of the module housing 200. Specifically, the other surface of the first protrusion part 213a may be adhesively fixed while being in contact with the bottom of the module housing 200, whereby the first cooling fin 210a is more firmly and fixedly located within the module housing 200. In FIG. 12, the case where the protrusion part of the cooling fin 210a is located between the bottom of the module housing 200 and the lower part of the first battery cell 110a will be mainly described, but the protrusion part of the first cooling fin 210a may also be located between the upper surface of the module housing 200 and the first battery cell 110a.

However, the shape of the first cooling fin 210a is not limited to those illustrated in the figure, and may have a flat plate shape, and any shape can be used without limitation as long as it can fix the first battery cell 110a while being in contact with the first battery cell 110a.

The first cooling fin 210a may be made of metal. Specifically, the first cooling fin 210a may be made of a metal with high thermal conductivity. Therefore, the first cooling fin 210a can directly receive transfer of heat generated in the first battery cell 110a during charging and discharging of the battery. When heat is generated, the heat is transferred to the first cooling fin 210a in contact with the side surface of the first battery cell 110a to perform primary cooling, and the coolant described below may directly contact the upper part and the lower part of the first battery cell 110a to perform secondary cooling. Thereby, direct cooling is possible even in the areas of the upper and lower parts of the battery cell, which were relatively difficult to cool in the past, thereby improving the cooling efficiency.

The first compression pad 250a may be located at the outermost part of the first battery cell assembly 120a. When the first battery cell 110a swells due to charging and discharging, it may perform the function to absorb the swelling. Specifically, the first compression pad 250a pushes out the side surface part of the module housing 200 while the first battery cell 110a swells, thereby preventing the first battery cell 110a from being broken, and thus improving the safety of the battery module 100.

However, the first compression pad 250a is not limited to being located only at the outermost part of the first battery cell assembly 120a, and it can also be located between the first battery cells 110a constituting the first battery cell assembly 120a.

The first busbar structure 300a includes a first busbar frame 310a and a first busbar 330a mounted on the first busbar frame 310a.

The first busbar frame 310a is located on a front surface and/or a rear surface of the first battery cell assembly 120a along the x-axis direction, and may be for covering a front surface and/or a rear surface of the first battery cell assembly 120a and at the same time, for guiding the connection between the first battery cell assembly 120a and an external device. The first busbar frame 310a may be located on a front surface (x-axis direction) and a rear surface (-x-axis direction) of the first battery cell assembly 120a. A first busbar 330a may be mounted on the first busbar frame 310a. In specific examples, referring to FIGS. 10 to 13, the inner surface of the first busbar frame 310a may be connected to the front surface (x-axis direction) and the rear surface (-x-axis direction) of the first battery cell assembly 120a, and the outer surface of the first busbar frame 310a may be connected to the first busbar 330a.

The first busbar frame 310a may include an electrically insulating material. The first busbar frame 310a may restrict contact with other parts of the first battery cells 110a other than the part where the first busbar 330a is joined to the electrode lead (not shown), and can prevent electrical short circuits from occurring.

The first busbar 330a can be mounted on one surface of the first busbar frame 310a to electrically connect the first battery cell assembly 120a or the first battery cells 110a to an external device circuit. The first busbar 330a is located on the first busbar frame 310a, and the first busbar structure 300a is covered from the sealing assembly 400 and the end plate 500, which will be described later, so that it can be protected from external impacts, etc., and can minimize the decrease in durability caused by external moisture.

The first busbar 330a may be electrically connected to the first battery cell assembly 120a via the electrode lead of the first battery cell 110a. Specifically, the electrode lead of the first battery cell 110a passes through a slit formed in the first busbar frame 310a and then can be bent and connected to the first busbar 330a. The first battery cells 110a constituting the first battery cell assembly 120a may be connected in series or in parallel by the first busbar 330a.

The first flexible printed circuit board 350a is configured such that it is extended and mounted in the longitudinal direction (x-axis direction) of the first battery cell assembly 120a to sense the first battery cell 110a. That is, as shown in FIGS. 11 and 12, the first flexible printed circuit board 350a can sense electrical and thermal data of the first battery cell 110a while being seated on the upper part (z-axis direction) of the first battery cell assembly 120a. Further, the first flexible printed circuit board 350a is electrically connected to the first busbar 330a while being bent toward the first busbar frame 310a at the end of the first battery cell assembly 120a.

The first sub-module 100a and the second sub-module 100b having the above configuration are housed in one module housing 200 while being mutually arranged in a line to form one battery module 100.

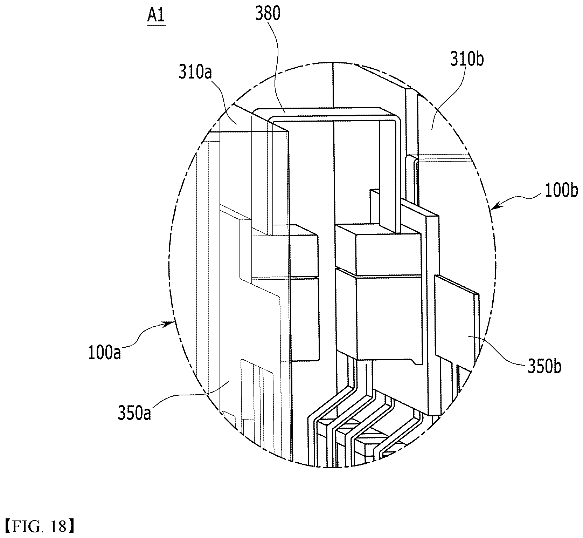

Referring to FIGS. 13 to 16, the battery module 100 according to the present embodiment has a structure in which the first sub-module 100a and the second sub-module 100b are arranged in a line along the longitudinal direction (x-axis direction) of the battery cell and housed in one module housing 200. Specifically, the first busbar structure 300a located at the other end of the first sub-module 100a and the second busbar structure 300b located at one end of the second sub-module 100b can be arranged facing each other to form the battery module 100 according to the present embodiment. In this case, referring to FIG. 15, the first busbar structure 300a and the second busbar structure 300b may be connected to each other due to a connection cable 380. The connection cable 380 will be described in more detail later with reference to FIG. 17.

Referring to FIGS. 14 and 15, side plates 230 may be provided on both side surfaces of one battery module 100 formed by arranging the first sub-module 100a and the second sub-module 100b in a line. The side plate 230 according to the present embodiment may be formed with an opening 232. Through the opening 232, the coupling member 327 described in FIG. 9 passes through the first hole 320h, the second hole 340h2, and the third hole 200DH and contacts the internal busbar 330 of FIG. 21, so that the terminal busbar 340 can be electrically connected to the internal busbar 330. In FIG. 14, the opening 232 is shown as having a square shape, but the shape is not limited thereto, and the shape of the opening 232 may be formed so as to correspond to the shape of the coupling member 327.

The side plate 230 may be a plate extending along the longitudinal direction (x-axis direction) of the battery module 100. Specifically, the length of the side plate 230 may correspond to the length of the battery module 100. Further, the length of the side plate 230 may correspond to the sum of the lengths of the first sub-module 100a and the second sub-module 100b. Herein, "corresponding in length" may mean that the length is equal to the length of the battery module or is within an error range of about 10% on the basis of the same value.

The side plate 230 may be located facing a first outermost battery cell 110a of the first sub-module 100a and a second outermost battery cell 110b of the second sub-module 100b, which constitute the battery module 100. Further, the side plate 230 may be located facing a first compression pad 250a of the first sub-module 100a and a second compression pad 250b of the second sub-module 100b, which constitute the battery module 100.

The side plate 230 may be made of metal having rigidity. When the first sub-module 100a and the second sub-module 100b are inserted and mounted into the module housing 200, the side plate 230 can perform the function to protect the outermost battery cells 110a and 110b or the compression pads 250a and 250b of the first sub-module 100a and the second sub-module 100b. Further, since the battery cell assemblies 120a and 120b constituting the battery module 100 of the present embodiment are longer than a length of a typical battery cell assembly, it may not be easy to insert and assemble them into the module housing 200. In this case, referring to FIGS. 14 to 16, the side plate 230 guides the battery cell assembly 120 constituting the battery module 100 of the present embodiment to be inserted into the module housing 200, which make it possible to easily assemble the battery module without damaging the battery cell 110 and the compression pads 250a and 250b.

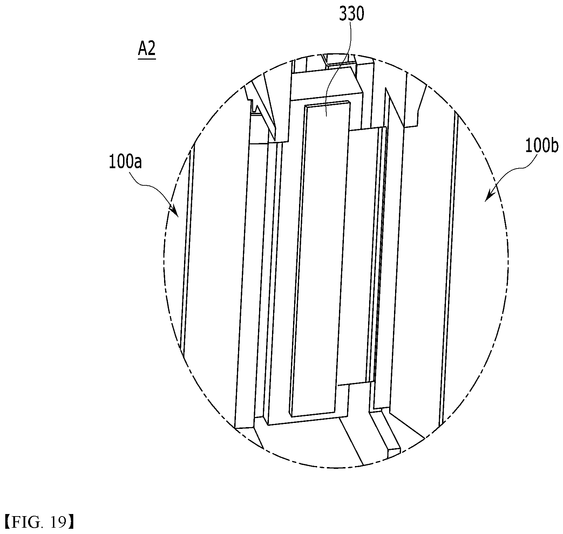

FIG. 17 is a diagram showing A1 in FIG. 13. FIG. 18 is a diagram showing A2 in FIG. 13.

Referring to FIG. 17, a connection cable 380 is provided between the first sub-module 100a and the second sub-module 100b, so that the first sub-module 100a and the second sub-module 100b can be connected to each other for sensing voltage, etc. The connection cable 380 may be a flexible flat cable (FFC).

The connection cable 380 can connect a first flexible printed circuit board 350a located in the first sub-module 100a and a second flexible printed circuit board 350b located in the second sub-module 100b. At this time, the first busbar frame 310a where the first flexible printed circuit board 350a is located, and the second busbar frame 310b where the second flexible printed circuit board 350b is located, are each composed of an insulating material, thereby capable of insulating other components excluding the busbar 330, the connection cable 380, and the flexible printed circuit board 350.

As mentioned above, the first flexible printed circuit board 350a and the second flexible printed circuit board 350b are connected via the connection cable 380, thereby reducing the overall height of the battery module 100 and increasing the energy density of the battery itself. Further, installation space for the battery module 100 can be ensured, and when the battery module 100 is installed in a device such as an automobile, the traveling performance and fuel efficiency can be improved.

Referring to FIGS. 13 and 18, at the outermost parts of the first busbar structure 300a and the second busbar structure 300b of the first sub-module 100a and the second sub-module 100b, the internal busbar 330 may be arranged so as to be connected with the terminal assembly 315 of FIG. 16. As explained in FIGS. 8 and 9, the terminal busbar 340 may be electrically connected to the internal busbar 330a of the first sub-module 100a or the internal busbar 330b of the second sub-module 100b by the coupling member 327 formed of a conductive material.

As mentioned above, when the first sub-module 100a and the second sub-module 100b are electrically connected to the terminal assembly 315, the electrical connection relationships between electrode leads, busbars, etc. and the path of current movement will be described in detail below.

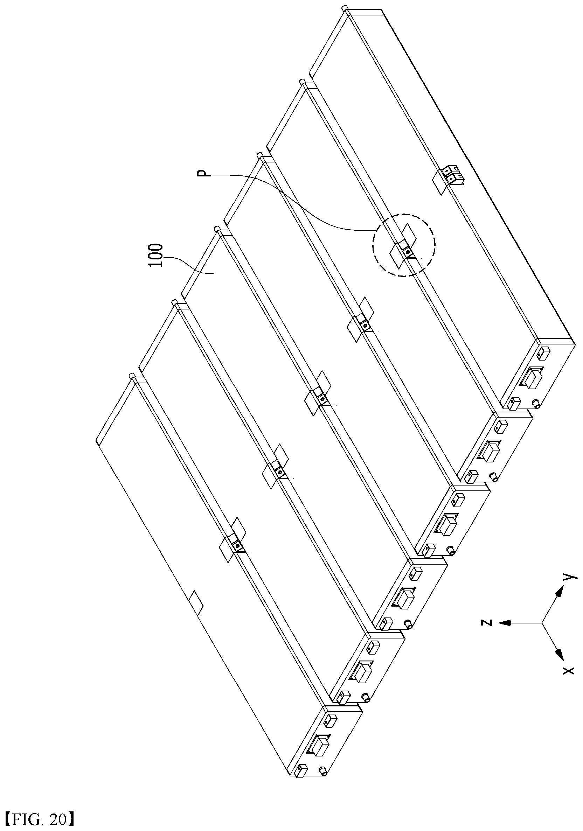

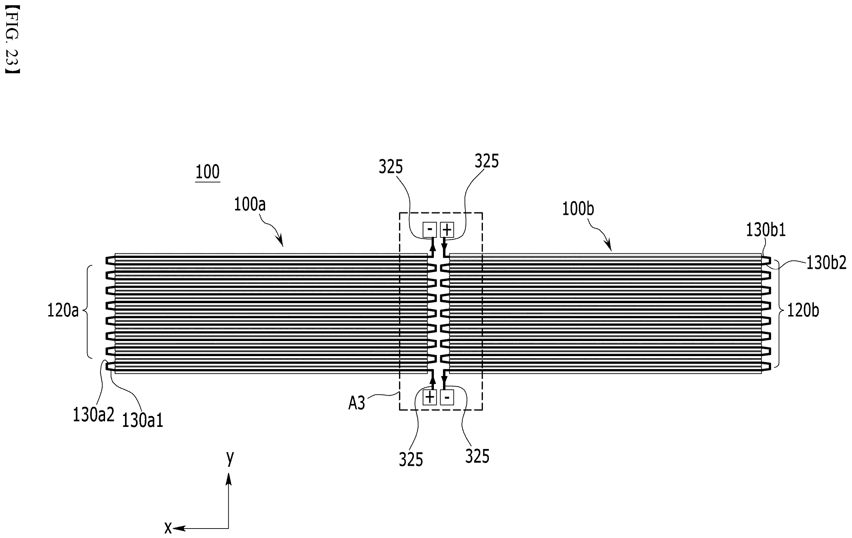

FIG. 19 is a perspective view showing a state in which a plurality of battery modules are electrically connected according to an embodiment of the present disclosure. FIG. 20 is an enlarged view of an area P in FIG. 19. FIG. 21 is a diagram showing the electrical connection relationship in the battery module according to the present embodiment. FIG. 22 is a diagram showing the movement path of current in the battery module.

Referring to FIGS. 19 and 20, a first battery module and a second battery module, in which a plurality of battery modules 100 are arranged along the y-axis direction and are adjacent to each other along the y-axis direction, each include a first terminal assembly 315a and a second terminal assembly 315b. The first and second terminal assemblies 315a and 315b include terminal housings 320a and 320b and terminal busbars 341 and 343 mounted within the terminal housings 320a and 320b, respectively, and in order to electrically connect mutually adjacent battery modules 100a and 100b, a connection member 325 may be formed to connect the first terminal assembly 315a and the second terminal assembly 315b. The connection member 325 may be fixed to the terminal busbars 341 and 343 and/or the terminal housing 320 by a fixing member 328 such as a bolt.

The terminal assembly 315 according to the present embodiment may be arranged to vertically overlap the internal beam 1110 formed between the first battery module and the second battery module. In one example, the terminal assembly 315 may be located on the internal beam 1110. By forming the terminal assembly 315 using the space above the internal beam 1110 in this way, it is possible to improve the energy density while increasing the space utilization efficiency.

Referring to FIGS. 21 and 22, in the first sub-module 100a and the second sub-module 100b included in one battery module 100, the part located on one side in the x-axis direction is defined as the first end, the part located on one side in the x-axis direction is defined as the second end, and the area where the first sub-module 100a and the second sub-module 100b face each other may be defined as the module extension part A3. Below, the connection structure of the electrode leads and the flow of current at the first end, the second end, and the module extension part A3 will be described in detail.

In one example, the first terminal busbar 341, which is the positive electrode, is connected to the outermost battery cell of the first sub-module 100a by the coupling member 327 of FIGS. 9 and 22, and mutually adjacent electrode leads 130a1 and 130a2 may be electrically connected. At this time, the first terminal busbar 341 may be electrically connected to the internal busbar 330 of the outermost battery cell by the coupling member 327. A plurality of battery cells may be electrically connected through electrode leads 130a1 and 130a2 each protruding from both ends of each battery cell. A pair of electrode leads 130a1 and 130a2 may be welded together with one busbar 330 and be electrically connected. By being electrically connected in this way, electric current can flow within the first sub-module 100a.

Similarly, the second terminal busbar 343 is connected to the outermost battery cell of the second sub-module 100b by the coupling member 327 of FIGS. 9 and 22, and the electrode leads 130b1 and 130b2 adjacent to each other can be electrically connected to each other. At this time, the second terminal busbar 343 may be electrically connected to the internal busbar 330 of the outermost battery cell by the coupling member 327. A plurality of battery cells may be electrically connected through electrode leads 130b1 and 130b2 each protruding from both ends of each battery cell. The pair of electrode leads 130b1 and 130b2 may be welded together with one busbar 330 and be electrically connected. By being electrically connected in this way, current can flow within the second sub-module 100b.

Referring to FIG. 22, in the module connection part A3 according to the present embodiment, it may be electrically connected to an external power source or the other battery module adjacent to the battery module 100 of FIG. 22, or may be connected to a BDU (battery disconnect unit), and HV (High voltage) connection structure is formed. The connection structure may be a structure in which the internal busbar 330 located at the outermost part of the battery cell is connected to the terminal assembly 315. The module connection part A3 may be an area including the second end of the first sub-module 100a and the first end of the second sub-module 100b.

When the electrical connection of the electrode leads 130a1, 130a2, 130b1 and 130b2 is formed as described above, electric current may move along the electrical connection of such electrode leads 130a1, 130a2, 130b1 and 130b2.

That is, the arrow in this figure refer to the flow of electric current. However, the flow of electric current is not limited to those described in this figure, and as long as a person skilled in the art can change the electrical connection of the electrode lead to easily change the flow of current, any flow current is available.

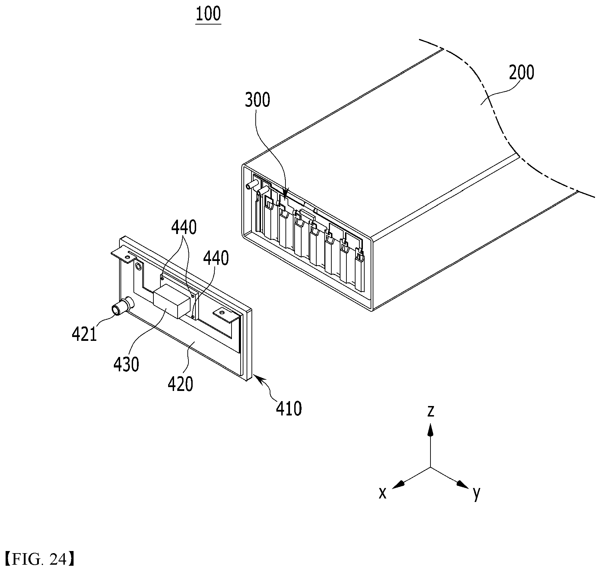

FIG. 23 is a perspective view showing that the first sealing assembly according to an embodiment of the present disclosure is mounted on one surface of the module housing.

Referring to FIG. 23, the battery module 100 according to an embodiment of the present disclosure may include a first sealing assembly 410 mounted on one open side of the module housing 200. Specifically, in the battery module 100 according to the present embodiment, the busbar structure 300 electrically connected to the battery cell assembly may be located on one open side of the module housing 200, and the first sealing assembly 410 may be mounted while covering the busbar structure 300.

The first sealing assembly 410 may include a first sealing cover 420 covering one open side of the module housing 200, an inlet 421 which is a hole formed in the first sealing cover 420, and a module connector 430 mounted on one area of the first sealing cover 420.

The first sealing cover 420 is a plate that covers one open side of the module housing 200, and may have a size corresponding to the size of the one open side of the module housing 200. That is, the first sealing cover 420 may be mounted on the module housing 200 while covering one open surface of the module housing 200. In one example, the first sealing cover 420 may be fitted with the module housing 200.

The inlet 421 may be configured such that a coolant flows into the battery module 100. The inlet 421 may be a hole formed in one area of the first sealing cover 420. The inlet 421 may be a hole that includes a protrusion part protruding from the first sealing cover 420 on the outer surface (x-axis direction) of the first sealing cover 420. That is, the inlet 421 may be a hole including a protrusion part protruding in the opposite direction of the area where the module housing 200 is arranged. The protrusion part may be located while passing through the inlet opening 540 formed in the first end plate 510, which will be described later.

The inlet 421 may be located closer to a lower part (-z-axis direction) than an upper part of the first sealing assembly 410. Specifically, the inlet 421 may be located at a lower part than a center part of the first sealing assembly 410 on the basis of the height (z-axis direction). Thereby, after the coolant flows inside the module housing 200, the coolant can be filled in the inside of the module housing 200 from the lower part to the upper part without any empty space, thereby improving the cooling performance of the battery cell assembly and other electrical components located inside the module housing 200.

The module connector 430 can detect phenomena such as overvoltage, overcurrent, and overheating of the battery cell and control them. The module connector 430 is for LV (Low voltage) connection, wherein the LV connection may refer to a sensing connection for detecting and controlling the voltage of the battery cell. The voltage information and temperature information of the battery cell can be transmitted to an external BMS (Battery Management System) through the module connector 430.

The module connector 430 may be mounted on the first sealing cover 420. At this time, the module connector 430 may be mounted by being coupled to the first sealing cover 420 through the coupling member 440. At least a part of the module connector 430 may be exposed to the outside of the end plate 510, which will be described later, and the end plate 510 may be provided with a module connector opening 530 for this purpose.

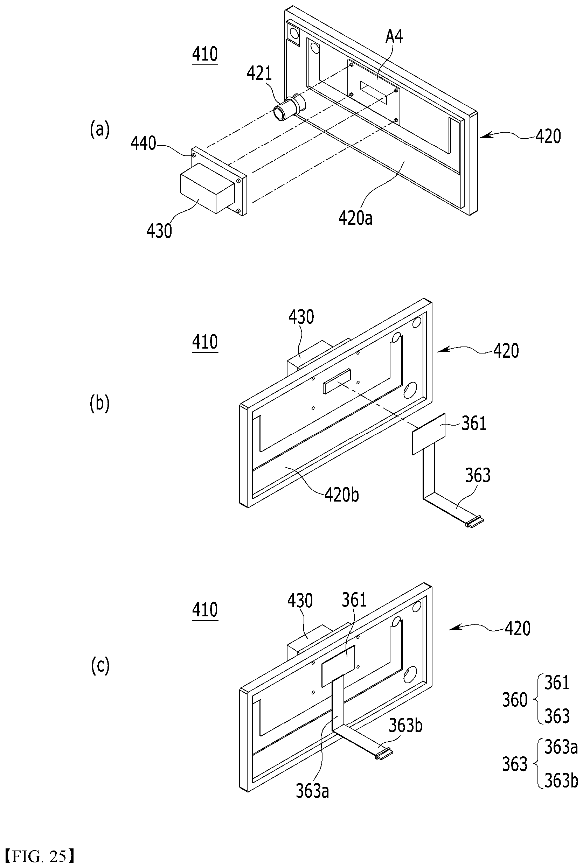

FIG. 24 is a diagram showing the process of assembling the first sealing assembly of FIG. 23. FIG. 24(a) is a diagram showing that the module connector is coupled to the first sealing cover. FIG. 24(b) is a diagram showing that the sensing unit is coupled to the first sealing cover. FIG. 24(c) is a diagram showing that both the module connector and the sensing unit are coupled to the first sealing cover.

Referring to FIG. 24, a module connector 430 is mounted on one surface of the first sealing assembly 410, and a sensing unit 360 is mounted on the other surface of the first sealing assembly 410, so that the module connector 430 and the sensing unit 360 can be electrically connected to each other.

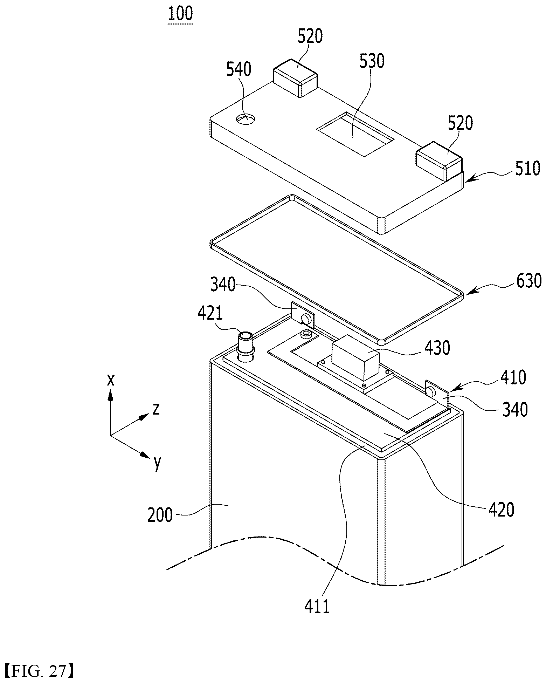

Referring to FIG. 24(a), a module connector 430 may be mounted on one surface of the first sealing cover 420. Specifically, the module connector 430 may be mounted on the outer surface 420a of the first sealing cover 420. The outer surface 420a of the first sealing cover 420 is a surface that faces the end plate 510 (see FIG. 26) described later, and may be a surface that does not face the module housing 200 (see FIG. 23).

The module connector 430 may be mounted and located in a fourth area A4, which is one area of the outer surface 420a of the first sealing cover 420. The fourth area A4 is an area corresponding to the size of the module connector 430, a hole passing through the first sealing cover 420 is provided in the center part of the fourth area A4, and a groove in which the coupling member 440 can be mounted may be provided at the vertex of the fourth area A4. **In** this case, a coupling member 440 may be provided at the vertex of the module connector 430, and the coupling member 440 may be located in an area corresponding to the groove of the fourth area A4. Therefore, the coupling member 440 can be coupled to a groove in the fourth area A4, and thereby the module connector 430 can be mounted in the fourth area A4.

The coupling member 440 can be used without limitation as long as it can couple and fix the module connector 430 to the fourth area A4, and may be, for example, a bolt, nut, or rivet.

Referring to FIG. 24(b) and FIG. 24(c), a sensing unit 360 may be mounted on the other surface of the first sealing cover 420. Specifically, the sensing unit 360 may be mounted on the inner surface 420b of the first sealing cover 420. The inner surface 420b of the first sealing cover 420 is a surface that faces the module housing 200 (see FIG. 23), and may be a surface that does not face the end plate 510 described later (see FIG. 26).

The sensing unit 360 may include a sensing printed circuit board 361 and a sensing cable 363 electrically connected to the sensing printed circuit board 361. The sensing printed circuit board 361 may be electrically connected to the module connector 430. The sensing printed circuit board 361 may be located in one area corresponding to the module connector 430. Specifically, the sensing printed circuit board 361 may be located in the fourth area A4. The sensing printed circuit board 361 may be located while being electrically connected to the module connector 430 through a hole in the fourth area A4.

The sensing cable 363 is a cable electrically connected to the sensing printed circuit board 361, and may include a cable connection part 363a and a cable extension part 363b.

The cable connection part 363a is connected to the sensing printed circuit board 361, and may be located while being in contact with the inner surface 420b of the first sealing cover 420. The cable connection part 363a is fixedly located while being in contact with the inner surface 420b of the first sealing cover 420, and may not move arbitrarily within the battery module 100, which may not cause a damage of components.

Specifically, the cable connection part 363a is located to extend from the sensing printed circuit board 361 to the lower part of the first sealing cover 420, and may be bent and extended from the lower part of the first sealing cover 420. At this time, a portion extending from the cable connection part 363a while being bent from the lower part of the first sealing cover 420 can be defined as a cable extension part 363b.

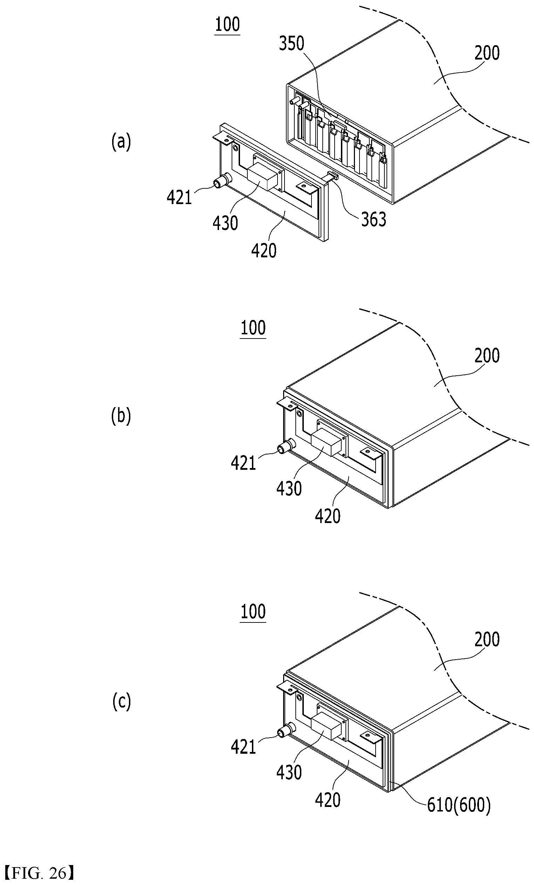

The cable extension part 363b may be electrically connected to the flexible printed circuit board 350 located in the busbar structure, and the details will be described later with reference to FIG. 25.

FIG. 25 is a diagram showing a process in which the first sealing assembly of FIG. 24 is mounted on one surface of the module housing. FIG. 25(a) is a diagram showing that a sensing cable is electrically connected to a flexible printed circuit board. FIG. 25(b) is a view showing that the first sealing assembly is coupled to the module housing. FIG. 25(c) is a view showing a state in which the first sealing assembly and the module housing are sealed.

Referring to FIG. 24(c) and FIG. 25(a), the sensing cable 363 may be electrically connected to the flexible printed circuit board 350 located on the busbar structure. In this case, the sensing cable 363 can transmit voltage information, temperature information, etc. of the battery cell acquired from the flexible printed circuit board 350 to the sensing printed circuit board 361. In this case, the sensing printed circuit board 361 can transmit battery cell information, etc. acquired from the flexible printed circuit board 350 to the module connector 430. That is, the sensing unit 360 can transmit battery cell data acquired from the flexible printed circuit board 350 to the module connector 430.

Therefore, the module connector 430 can transmit data acquired from the flexible printed circuit board 350 and the sensing unit 360 to a BMS (battery management system), and the BMS can control the charging and discharging of battery cells on the basis of the collected voltage data.

Referring to FIG. 25(a) and FIG. 25(b), the first sealing cover 420 may be mounted on the module housing 200 while covering one open surface of the module housing 200. **In** one example, the first sealing cover 420 may be fitted with the module housing 200. **In** this case, the edge of the first sealing cover 420 may include a protrusion part that partially protrudes toward the direction coupling to the module housing 200. At this time, the edge of the module housing 200 coupled to the first sealing cover 420 may be formed with a step so that the edge protrusion part of the first sealing cover 420 can be inserted. Thus, the first sealing cover 420 and the module housing 200 may be fitted together.

Referring to FIG. 25(c), when the first sealing cover 420 and the opened one side of the module housing 200 are coupled to each other, the first sealing member 610 may be interposed along the edges of the first sealing cover 420 and the module housing 200. When the first sealing cover 420 and the module housing 200 are coupled, a fine gap may occur between them due to assembly tolerances, and this is sealed with the first sealing member 610 to improve the sealing force of the battery module 100. Therefore, it is possible to prevent leakage of the coolant located inside the battery module 100, to prevent the leakage of gas generated inside the battery module 100, and to control the direction of gas discharge, thereby improving the safety of the battery module 100. FIG. 25(c) illustrates as being exposed to the outside in order to show the first sealing member 610, but the first sealing member 610 may be interposed between the module housing 200 and the first sealing cover 420.

In this case, the first sealing member 610 may be, for example, an adhesive tape.

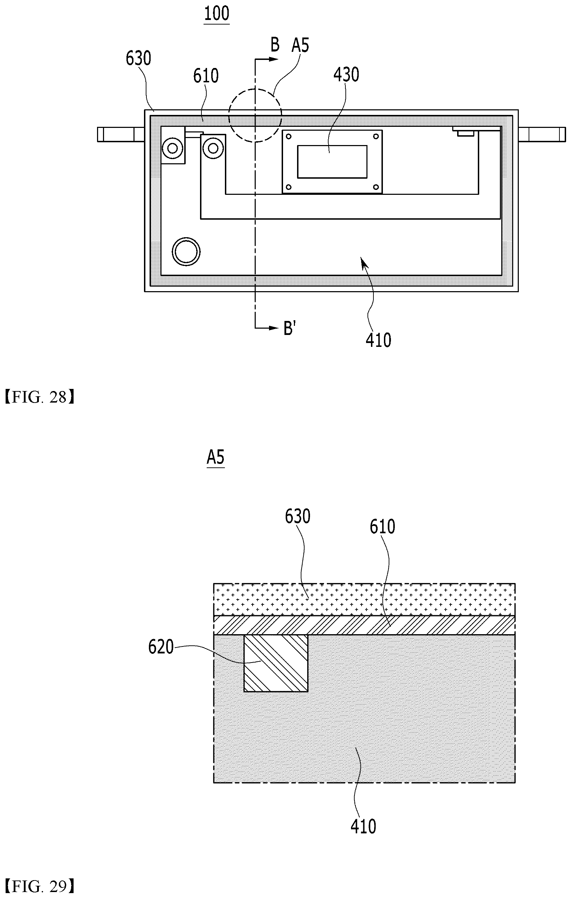

Although not illustrated in this figure, after the first sealing assembly 410 is coupled to the module housing 200 and the edges are sealed with the first sealing member 610, other gaps existing in the first sealing assembly 410 may be sealed with a second sealing member 620 (see FIGS. 27 and 28). Thereby, the second sealing member 620 is used to seal the portions of the first sealing assembly 410 other than the edges that cannot be sealed by the first sealing member 610, thereby further improving the sealing force of the battery module 100. The second sealing member 620 will be described in more detail with reference to FIG. 27.

FIG. 26 is an exploded perspective view showing that the first end plate is mounted on the first seal assembly according to an embodiment of the present disclosure.

Referring to FIG. 26, in the battery module 100 according to an embodiment of the present disclosure, the first end plate 510 may be located while covering the first sealing assembly 410.

The first end plate 510 may include a terminal busbar opening 520, a module connector opening 530, and an inlet opening 540.

The terminal busbar opening 520 is an opening provided in the first end plate 510. Specifically, the terminal busbar opening 520 may be an opening formed in an area corresponding to the position of the terminal busbar 340 provided in the first sealing assembly 410.

The terminal busbar opening 520 is a protrusion part that protrudes from the first end plate 510 toward the outside of the battery module 100, and may have a configuration in which only the upper surface of the protrusion part is opened. In this case, a part of the terminal busbar 340 may be exposed to the outside on the upper surface of the protrusion part.

The size of the terminal busbar opening 520 may be mainly determined by the circumferential size of the terminal busbar 340. However, for ease of assembly or for manufacturing process reasons, the size of the terminal busbar opening 520 may be larger than the size of the exposed portion of the terminal busbar 340, wherein a gap may occur between the terminal busbar opening 520 and the terminal busbar 340 that are exposed to the outside.

The module connector opening 530 and the inlet opening 540 are openings provided in the first end plate 510, and are holes passing through the first end plate 510. Specifically, the module connector opening 530 may be an opening formed in an area corresponding to the position of the module connector 430 provided in the first sealing assembly 410, and the inlet opening 540 may be an opening formed in an area corresponding to the position of the outlet 461 provided in the first sealing assembly 410. In this case, the module connector 430 is located while passing through the module connector opening 530, and the inlet 421 is located while passing through the inlet opening 540, whereby at least a part of the module connector 430 and the inlet 421 may be exposed to the outside.

The sizes of the module connector opening 530 and the inlet opening 540 may be mainly determined by the circumferential sizes of the module connector 430 and the inlet 421. However, for ease of assembly or for manufacturing process reasons, the size of the module connector opening 530 and the inlet opening 540 may be larger than the size of the exposed portion of the module connector 430 and the inlet 421, wherein a gap may occur between the module connector 430 and the inlet 421 that are exposed to the outside of the module connector opening 530 and the inlet opening 540.

The terminal busbar 340 and module connector 430 are respectively exposed to the outside through the terminal busbar opening 520 and the module connector opening 530, thereby facilitating HV connection and LV connection with external electrical components. Therefore, the assembly process efficiency can be improved.

The inlet 421 is exposed to the outside of the battery module 100 through the inlet opening 540, and thus, when the coolant is injected into the module housing 200 through the inlet 421, the coolant can be prevented from leaking between the first sealing assembly 410 and the first end plate 510. Therefore, the coolant may not come into contact with the terminal busbar 340 or the module connector 430 that makes electrical connections to the outside. That is, a short circuit between the components may not occur, and thus, the safety of the battery module 100 may be improved.

A third sealing member 630 may be interposed between the first end plate 510 and the first sealing assembly 410.

The third sealing member 630 may be formed in the shape corresponding to the edge of the first sealing assembly 410 or the edge of the first end plate 510. The third sealing member 630 may be a resin that is coated and then cured to correspond to the edge of the first sealing assembly 410 or the edge of the first end plate 510. Specifically, the third sealing member 630 may be coated onto the first groove 411, which is a groove formed along the edge of the first sealing assembly 410, and may be cured after the first sealing assembly 410 and the first end plate 510 are coupled. In one example, the third sealing member 630 may be made of an epoxy resin.

That is, the third sealing member 630 is interposed between the first sealing assembly 410 and the first end plate 510, so that the first sealing assembly 410 and the first end plate 510 can be coupled without a gap formed due to assembly tolerances.

Therefore, the sealing force of the battery module 100 is improved, leakage of the coolant located within the battery module 100 is prevented, and thus, the cooling performance of the battery module 100 can be enhanced. Further, within the battery module 100, it is possible to adjust the venting direction while preventing venting gas generated at a prescribed temperature and pressure or higher from being discharged to the outside through the gap, thereby improving the safety of the battery module 100.

However, the type and formation method of the third sealing member 630 are not limited to those described above, and may have a shape such as a gasket formed of an elastic member, and any shape is available as long as it can serve to seal the first sealing assembly 410 and the first end plate 510.

FIG. 27 is a view of the first end plate mounted on the first sealing assembly viewed in the -x-axis direction of FIG. 26. FIG. 28 is a diagram showing A5 cut along B-B' in FIG. 27.

Referring to FIGS. 27 and 28, it can be seen that a first sealing member 610 and a third sealing member 630 are located along the edge of the first sealing assembly 410, and a second sealing member 620 is located in one area of the first sealing assembly 410.

In regard to the second sealing member 620, referring to FIG. 28, the second sealing member 620 may be located in one area excluding the edge area of the first sealing assembly 410. That is, the second sealing member 620 can seal the remaining area of the first sealing assembly 410 that is not covered by the first sealing member 610 and the third sealing member 630. Specifically, the second sealing member 620 may seal one area involving a gap in the first sealing assembly 410. However, the area where the second sealing member 620 is located is not limited to the area shown in this figure. For example, the second sealing member 620 may seal a gap part of the first sealing assembly 410 where the module connector 430 is coupled.

Consequently, in addition to the edge portion of the first sealing assembly 410, the portion where a gap is located is further sealed by the second sealing member 620, so that the sealing force of the battery module 100 is improved, leakage of the coolant located inside the battery module 100 is prevented, and thus, the cooling performance of the battery module 100 can be improved. Further, since gas generated inside the battery module 100 at a prescribed temperature and pressure or higher is not discharged through the gap between the first sealing assembly 410 and the first end plate 510, the safety of the battery module 100 can be enhanced.

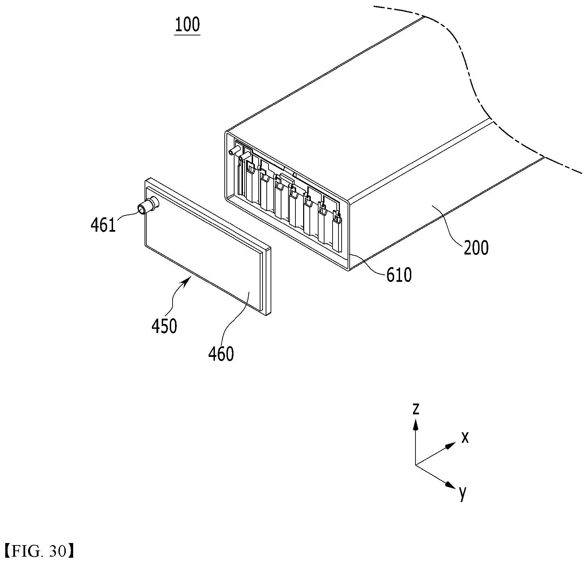

FIG. 29 is a diagram showing that the second sealing assembly is mounted on the other surface of the module housing according to an embodiment of the present disclosure.

Referring to FIG. 29, the battery module 100 according to an embodiment of the present disclosure may include a second sealing assembly 450 mounted on the other open surface of the module housing 200. Specifically, in the battery module 100 according to the present embodiment, the busbar structure 300 electrically connected to the battery cell assembly may be located on the other open side of the module housing 200, and the second sealing assembly 450 may be mounted while covering the busbar structure 300.

The second sealing assembly 450 may include a second sealing cover 460 covering the other open surface of the module housing 200, and an outlet 461 that is a hole formed in the second sealing cover 460.

The second sealing cover 460 is a plate that covers the other open surface of the module housing 200, and may have a size corresponding to the size of the other open surface of the module housing 200. Herein, "corresponding in size" may mean that the size is equal to the size of the other open side of the module housing 200, or that the size is within an error range of about 10% on the basis of the same size. That is, the second sealing cover 460 may be mounted on the module housing 200 while covering one open side of the module housing 200. **In** one example, the second sealing cover 460 may be fitted with the module housing 200.

The outlet 461 may discharge the coolant that has flowed into the battery module 100 through the inlet, to the outside of the battery module 100.

The outlet 461 may be a hole formed in one area of the second sealing cover 460. The outlet 461 may be a hole including a protrusion part protruding along the outer surface (-x-axis direction) of the second sealing cover 460. That is, the outlet 461 may be a hole including a protrusion part protruding in the opposite direction of the module housing 200. The protrusion part may be located while passing through the outlet opening 560 formed in the second end plate 550, which will be described later.

The outlet 461 may be located close to the upper part (z-axis direction) of the second sealing assembly 450. Specifically, the outlet 461 may be located above the center part on the basis of the height of second seal assembly 450. However, the position of the outlet 461 is not limited thereto.

When the second sealing assembly 450 and one open side of the module housing 200 are coupled to each other, the first sealing member 610 may be interposed along the edge of the second sealing cover 460 and the module housing 200. When the second sealing cover 460 and the module housing 200 are coupled, a fine gap may occur between them due to assembly tolerances, and this gap is sealed with a sealing member 600, thereby capable of improving the sealing force of the battery module 100. Therefore, leakage of coolant located inside the battery module 100 can be prevented, leakage of venting gas occurring inside the battery module 100 can also be prevented, and thus, the discharge direction of the gas can also be controlled, thereby improving the safety of the battery module 100.

In this case, the first sealing member 610 may be, for example, an adhesive tape.

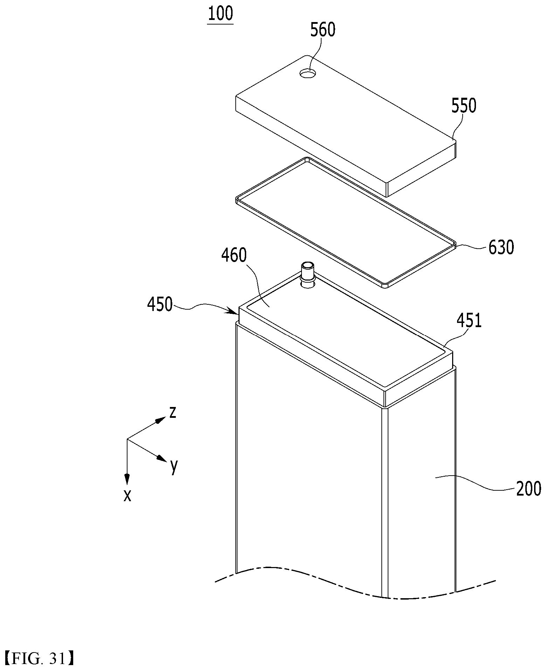

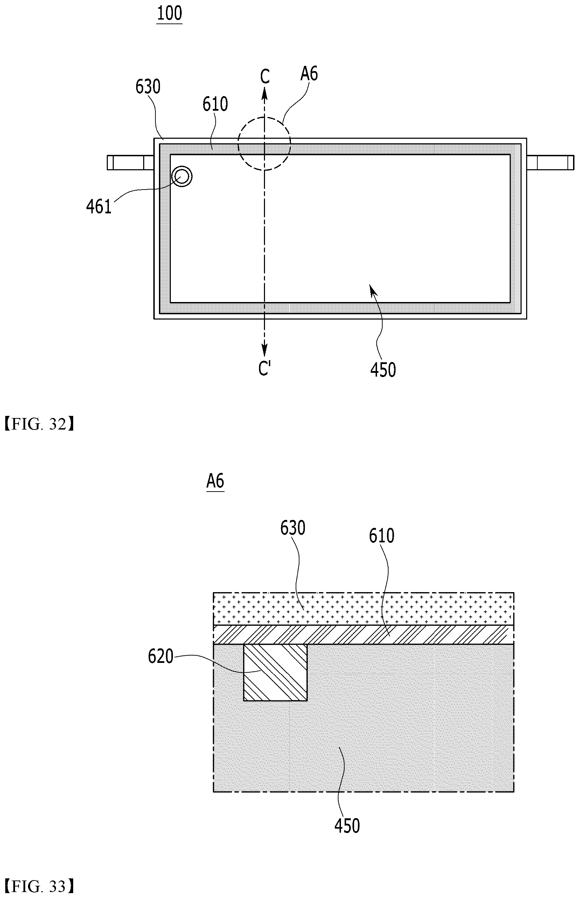

Although not shown in this figure, after the second sealing assembly 450 is coupled to the module housing 200 and the edges are sealed with the first sealing member 610, the gap existing on the second sealing assembly 450 may be sealed with a second sealing member 620 (see FIG. 32). This is to use the second sealing member 620 to seal the portions of the second seal assembly 450 other than the edges that cannot be sealed with the first sealing member 610, and to further improve the sealing force of the battery module 100. The second sealing member 620 will be explained in more detail with reference to FIG. 30.

FIG. 30 is an exploded perspective view showing that the second end plate is mounted on the second seal assembly according to an embodiment of the present disclosure.

Referring to FIG. 30, in the battery module 100 according to an embodiment of the present disclosure, the second end plate 550 may be located while covering the second sealing assembly 450.

The second end plate 550 may include an outlet opening 560.

The outlet opening 560 is an opening provided in the second end plate 550, and is a hole that passes through the second end plate 550. Specifically, the outlet opening 560 may be an opening formed in an area corresponding to the position of the outlet 461 provided in the second sealing assembly 450. In this case, the outlet 461 is located while passing through the outlet opening 560, so that at least a part of the outlet 461 may be exposed to the outside.

The size of the outlet opening 560 may be mainly determined by the circumferential size of the outlet 461. However, for ease of assembly or for manufacturing process reasons, the size of the outlet opening 560 may be larger than the size of the exposed portion of the outlet 461, wherein a gap may occur between the outlets 461 exposed to the outside of the outlet opening 560.

The outlet 461 is exposed to the outside of the battery module 100 through the outlet opening 560, and thus, when the coolant located inside the module housing 200 is discharged through the outlet 461, it is possible to prevent a coolant from leaking between the second sealing assembly 450 and the second end plate 550. Therefore, since the coolant does not come into contact with other electrical components, a short circuit may not occur, and thus, the safety of the battery module 100 can be improved.

A third sealing member 630 may be interposed between the second sealing assembly 450 and the second end plate 550.

The third sealing member 630 may be formed in the shape corresponding to the edge of the second sealing assembly 450 or the edge of the second end plate 550. The third sealing member 630 may be a resin that is coated and then cured to correspond to the edge of the second sealing assembly 450 or the edge of the second end plate 550. Specifically, the third sealing member 630 may be coated onto the second groove 451, which is a groove formed along the edge of the second sealing assembly 450, and after the second sealing assembly 450 and the second end plate 550 are coupled, they may be cured. In one example, the third sealing member 630 may be made of an epoxy resin.

That is, the third sealing member 630 is interposed between the second sealing assembly 450 and the second end plate 550, so that the second sealing assembly 450 and the second end plate 550 can be coupled without gaps formed due to assembly tolerances.

Therefore, the sealing force of the battery module 100 is improved, and leakage of the coolant located within the battery module 100 is prevented, thereby improving the cooling performance of the battery. Further, within the battery module 100, the venting direction can be adjusted while preventing the venting gas generated at a prescribed temperature and pressure or higher from being discharged to the outside through the gap, thereby improving the safety of the battery module 100.

The type and formation method of the third sealing member 630 are not limited to those described above, and may have a shape such as a gasket formed of an elastic member, and any shape is available as long as it can serve to seal the second sealing assembly 450 and the second end plate 550.

FIG. 31 is a view of the second end plate mounted on the second sealing assembly viewed in the -x-axis direction of FIG. 30. FIG. 32 is a view showing A6 cut along C-C' of FIG. 31.

Referring to FIGS. 31 and 32, it can be seen that a first sealing member 610 and a third sealing member 630 are located along the edge of the second sealing assembly 450, and a second sealing member 620 is located in one area of the second sealing assembly 450.

In regard to the second sealing member 620, referring to FIG. 32, the second sealing member 620 may be located in one area excluding the edge area of the second sealing assembly 450. That is, the second sealing member 620 can seal the remaining area of the second sealing assembly 450 that is not covered by the first sealing member 610 and the third sealing member 630. Specifically, the second sealing member 620 may seal one area involving a gap in the first sealing assembly 410. However, the area where the second sealing member 620 is located is not limited to the area shown in this figure.

Consequently, in addition to the edge portion of the second sealing assembly 450, the portion where a gap is located is further sealed by the second sealing member 620, so that the sealing force of the battery module 100 is improved, leakage of the coolant located inside the battery module 100 is prevented, and thus, the cooling performance of the battery module 100 can be improved. Further, since gas generated inside the battery module 100 at a prescribed temperature and pressure or higher is not discharged through the gap between the second sealing assembly 450 and the second end plate 550, the safety of the battery module 100 can be enhanced.

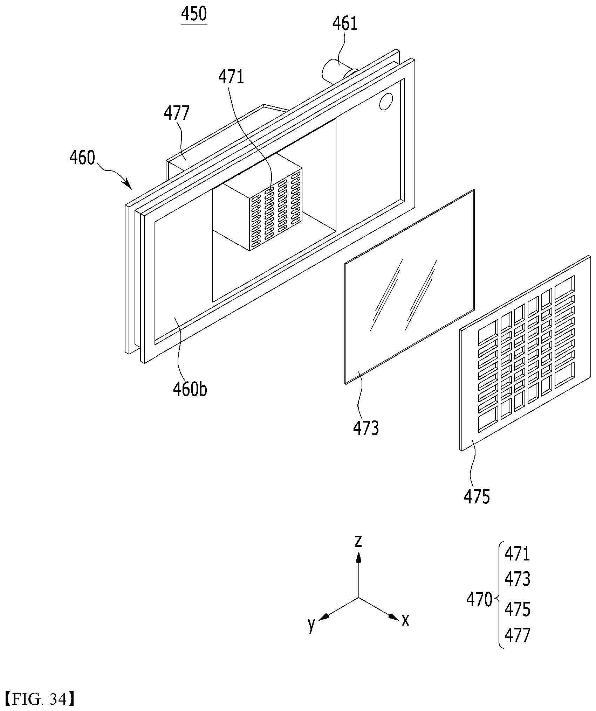

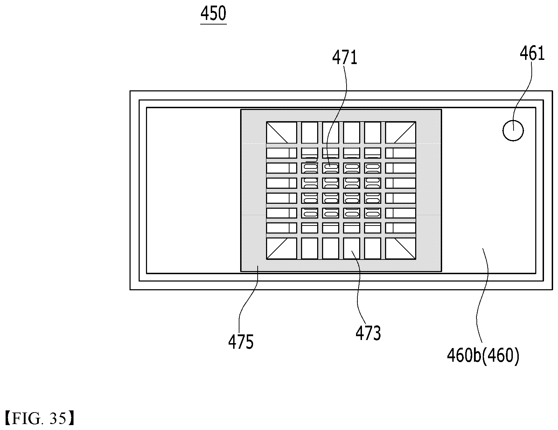

FIG. 33 is an exploded perspective view of a second sealing assembly according to another embodiment of the present disclosure. FIG. 34 is a diagram when FIG. 33 is viewed in the -y-axis direction.

Referring to FIGS. 33 and 34, the second sealing assembly 450 according to another embodiment of the present disclosure may further include an outlet 461 and a module venting part 470. Since the outlet 461 is the same as described above, the module venting portion 470 will be mainly described below.

The module venting part 470 can discharge gas generated inside the battery module 100 to the outside at a certain temperature and pressure or higher. Specifically, the module venting part 470 can prevent the coolant inside the battery module 100 from leaking while discharging the gas inside the battery module 100 to the outside.

The module venting part 470 may be provided in one area of the second sealing cover 460. The module venting part 470 may include a venting hole 471, a membrane 473, a fixing cover 475, and a venting protrusion part 477.

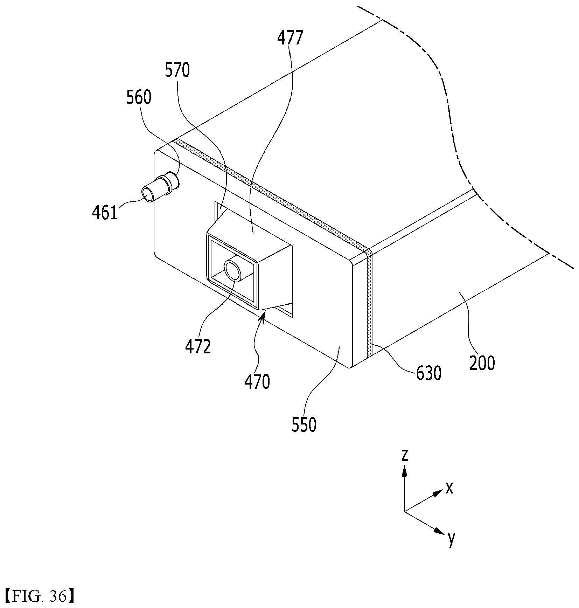

The venting hole 471 may be a passage through which gas generated inside the battery module 100 moves to the outside. The venting hole 471 may be at least one hole provided in one area of the second sealing cover 460. The venting hole 471 may be structurally connected to the module connection part 472 described later in FIG. 35, and the details will be described in detail in FIG. 35.

The membrane 473 may be a membrane that allows gas located inside the battery module 100 to be discharged to the outside through the venting hole 471, but prevents the coolant from leaking to the outside.

The membrane 473 may be located between the inner surface 460b of the second sealing cover 460 and the fixing cover 475. The membrane 473 may be located while being in contact with the inner surface 460b of the second sealing cover 460. **In** this case, one surface of the membrane 473 may be fixedly located while being in contact with the inner surface 460b of the second sealing cover 460, and the other surface of the membrane 473 may be fixedly located while being in contact with one surface of the fixing cover 475.

The fixing cover 475 may primarily allow gas and coolant located inside the battery module 100 to pass therethrough. The fixing cover 475 may be located closest to the battery cell assembly.

The fixing cover 475 may be located while being in contact with the membrane. Specifically, one surface of the fixing cover 475 may be adhesively fixed to the other surface of the membrane 473. In this case, the size of the fixing cover 475 may correspond to the size of the membrane 473 or may be larger than the size of the membrane 473.

The fixing cover 475 may have a shape in which a hole is provided in a flat plate. However, the hole may not be located in the edge area of the fixing cover 475.

The edge area of the fixing cover 475 may be in contact with the membrane 473 and/or the inner surface 460b of the second sealing cover 460. In this case, although not illustrated in this figure, an adhesive member may be interposed along the edge area of the fixing cover 475, and the fixing cover 475 may be fixedly located on the second sealing assembly 450 by the adhesive member. The hole provided in the fixing cover 475 can allow to move gas and coolant located inside the battery module 100 to the membrane 473. At least one hole can be formed.

The venting protrusion part 477 may be one area where an area corresponding to the module venting part 470 protrudes toward the outside (x-axis direction) of the battery module 100. The venting protrusion part 477 may be an area that protrusively extends outward from an area where the venting hole 471 is provided. A part of the venting protrusion part 477 may pass through the second end plate 550, and be exposed to the outside, so that the venting gas can be completely discharged to the outside of the battery module 100. The details will be explained in more detail based on FIG. 35.

FIG. 35 is a diagram showing that the second sealing assembly of FIG. 33 is coupled with the second end plate.

Referring to FIG. 35, when the second end plate 550 is mounted while covering the second sealing assembly 450, it may pass through the second end plate 550 so that the outlet 461 and at least a part of the module venting part 470 may be exposed to the outside.

Specifically, the outlet 461 may be partially exposed to the outside through the outlet opening 560 provided in the second end plate 550, and the module venting part 470 may pass through the venting opening 570 provided in the second end plate 550 and be partially exposed to the outside.

Since the outlet 461 and the outlet opening 560 are the same as those described above in FIG. 26, the details will be omitted. Below, the module venting part 470 and venting opening 570 will be described in detail.

The module venting part 470 includes a venting protrusion part 477 that protrudes in a direction opposite to the module housing 200, and the venting protrusion part 477 may be provided with a module connection part 472.

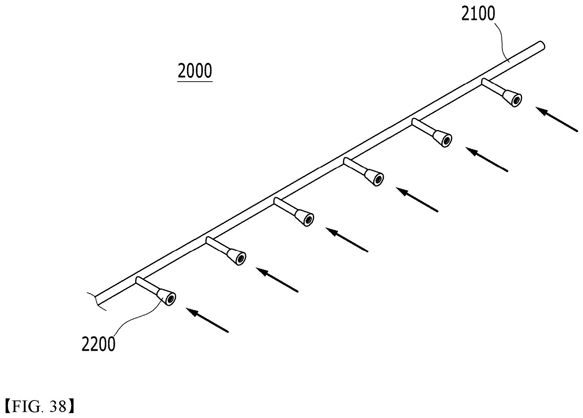

The module connection part 472 is one hole that communicates with the above-mentioned venting hole 471, and can pass through the second end plate 550 like the venting protrusion part 477and be partially exposed to the outside. The module connection part 472 is connected to the pack venting part 2000 (FIG. 37) of the battery pack, which will be described later, so that the venting gas moving through the venting hole 471 can be discharged to the outside of the battery module. That is, at least a part of the module connection part 472 passes through the second end plate 550 and is exposed to the outside, thereby facilitating assembly with the pack venting part 2000. Therefore, the efficiency of the battery assembly process can be improved. Further, the venting gas discharged through the module connection part 472 may not remain in the space between the second end plate 550 and the second sealing assembly 450. Thus, since venting gas may not remain inside the battery module 100, the safety of the battery module 100 can be improved.

The venting opening 570 is an opening provided in the second end plate 550 and is a hole passing through the second end plate 550. Specifically, the venting opening 570 may be an opening formed in an area corresponding to the position of the venting protrusion part 477 provided in the second sealing assembly 450. In this case, the venting protrusion part 477 is located while passing through the venting opening 570 together with the module connection part 472, so that at least a part of the venting protrusion part 477 and the module connection part 472 may be exposed to the outside.

The size of the venting opening 570 may be mainly determined by the circumferential size of the venting protrusion part 477. However, for ease of assembly or for manufacturing process reasons, the size of the venting opening 570 may be larger than the size of the exposed portion of the venting protrusion part 477, wherein a gap may occur between the venting opening 570 and the venting protrusion part 477 exposed to the outside.

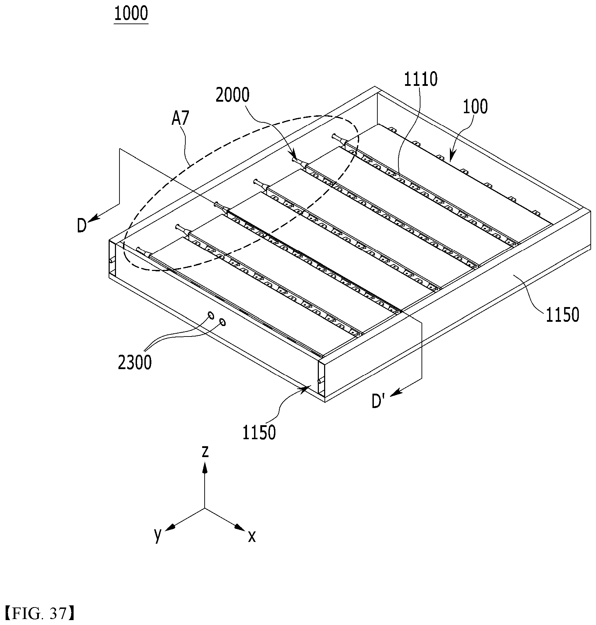

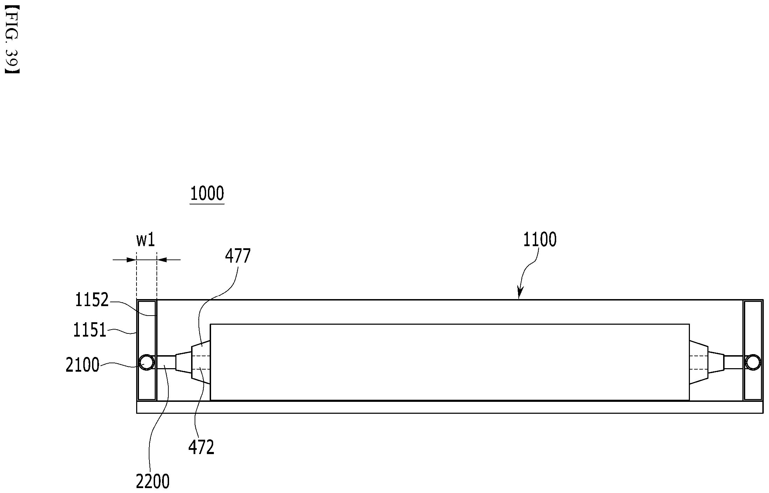

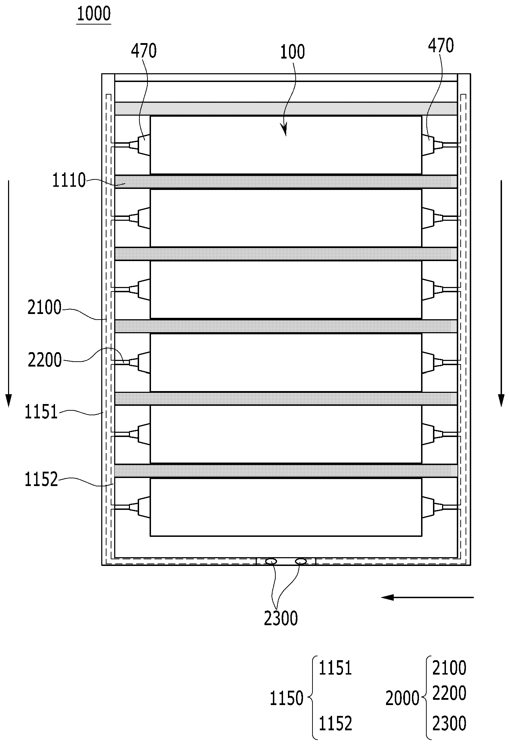

FIG. 36 is a perspective view showing the inside of a battery pack according to an embodiment of the present disclosure. FIG. 37 is a diagram showing a pack venting part according to an embodiment of the present disclosure. FIG. 38 is a cross-sectional view taken along D-D' of FIG. 36. FIG. 39 is a perspective view of FIG. 36 viewed in the -z-axis direction.

Referring to FIGS. 36 to 39, in the battery pack 1000 according to an embodiment of the present disclosure, a plurality of battery modules 100 are mounted in a space partitioned by an internal beam 1110 within the lower pack frame 1100, and the plurality of battery modules 100 may be connected to the pack venting part 2000. Specifically, a module venting part 470 is provided at the ends of the plurality of battery modules 100, and the module venting part 470 may be connected to the pack venting part 2000.

The pack venting part 2000 may include a direction adjustment part 2100, a pack connection part 2200, and an outlet 2300.

Referring to FIGS. 37 to 39, the direction adjustment part 2100 may be a pipe that controls the direction of the venting gas and discharges the venting gas to the outside of the battery pack 1000. Specifically, one end of the direction adjustment part 2100 is closed, but the other end may be a pipe connected to the outlet 2300 in an open state.

The direction adjustment part 2100 may be located inside the side surface pack frame 1150. The direction adjustment part 2100 extends along the side surface pack frame to the outlet 2300, so that venting gas can be discharged to the outside through the outlet 2300.

The direction adjustment part 2100 may be located between the outer surface 1151 and the inner surface 1152 of the side surface pack frame 1150. A space may be formed between the outer surface 1151 and the inner surface 1152 of the side surface pack frame 1150, and the direction adjustment part 2100 may be located in this space. In this case, referring to FIG. 34, the diameter of the direction adjustment part 2100 may be equal to or smaller than the width w1 of the side surface pack frame 1500. However, the position of the direction adjustment part 2100 is not limited thereto. In one example, the direction adjustment part may be located outside the side surface pack frame 1150 and extend along the length of the side surface pack frame 1150.

The direction adjustment part 2100 may be connected to the pack connection part 2200. The pack connection part 2200 may be one area protruding from one surface of the direction adjustment part 2100 toward the module venting part 470. In this case, referring to FIG. 37, the direction adjustment part 2100 and the pack connection part 2200 may have a manifold shape.

The pack connection part 2200 may be configured to connect the module venting part 470 and the pack venting part 2000. That is, the pack connection part 2200 may be configured to connect the module venting part 470 and the direction adjustment part 2100. Specifically, the pack connection part 2200 is connected to the module venting part 470 so that gas generated inside the battery module 100 can be moved to the pack venting part 2000. In this case, the pack connection part 2200 may be connected to the module venting part 470 through a fitting connection, but is not limited thereto.

The module venting part 470 includes a module connection part 472 exposed to the outside of the battery module 100 and connected to the pack connection part 2200, and a protrusion part 477 that protrudes while surrounding the module connection part 472. The protrusion part 477 may be one area that surrounds the module connection part 472 and protrudes from the second sealing assembly 450 in the opposite direction of the module housing 200. The protrusion part 477 may physically protect the module connection part 472 and at the same time, guide the pack connection part 2200 to be connected to the module connection part 472.

When the direction adjustment part 2100 is located inside the side surface pack frame 1150, the pack connection part 2200 may be located while passing through the side surface pack frame 1150. That is, the pack connection part 2200 may be located while passing through the inner surface 1152 of the side surface pack frame 1150. In this case, a hole may be provided in one area of the inner surface 1152 of the side surface pack frame 1150 corresponding to the area where the pack connection part 2200 is provided. The hole may correspond to the size of the pack connection part 2200, or may be larger than the size of the pack connection part 2200 for ease of assembly. Herein, "corresponding in size" may mean that they are equal to each other or that they are within an error range of about 10% on the basis of the same value as the size of the pack connection part 2200.

The discharge port 2300 is connected to the direction adjustment part 2100 and can discharge gas moving through the direction adjustment part 2100 to the outside of the battery pack 1000.

The discharge port 2300 may be provided in the side surface pack frame 1150. Referring to FIG. 39, the discharge port 2300 may be provided in one area of the side surface pack frame 1150. Specifically, the discharge port 2300 may be provided in one area of the side surface pack frame 1150 where the pack connection part 2200 is not located. This may be to set the distance between the direction adjustment part 2100 and the discharge port 2300, that is, the movement path of the venting gas, as long as possible, relatively reduce the intensity and temperature of the venting gas and discharge it to the outside.

The discharge port 2300 may be a member that opens or closes, or ruptures depending on the pressure inside the battery pack 1000.

In one example, the discharge port 2300 is connected to the inside of the battery pack 1000, but can be composed of a member that is opened to the outside only when the pressure within the battery pack 1000 exceeds a prescribed pressure, and is closed when the pressure falls below a prescribed pressure. In one example, the discharge port 2300 may be a relief valve. However, the discharge port 2300 is not limited thereto, and any member that can be opened or closed depending on the pressure of the battery pack 1000 can be included in the present embodiment.

In another example, the discharge port 2300 may rupture when the pressure inside the battery pack 1000 reaches a prescribed level or higher. More specifically, the discharge port 2300 may include a rupture surface (not shown) configured to rupture when the pressure of the inflowing gas exceeds a prescribed pressure, such as a rupture disk. However, the structure of the discharge port 2300 is not limited thereto, and any structure that communicates with the direction adjustment part 2100 and allows internal gas to be discharged to the outside can be included in the present embodiment.

As described above, high-temperature gas and/or flame generated inside the battery module 100 may be moved to the pack venting part 2000 through the module venting part 470, thereby discharging to the outside of the battery pack 1000. Specifically, the high-temperature gas and/or flame flowed in through the pack connection part 2200 moves inside the direction adjustment part 2100 and finally can be discharged to the outside through the discharge port 2300 at the side surface frame 1150 where the discharge port 2300 is located.

Thereby, the side surface frame 1150 and the direction adjustment part 2100 provided inside the side surface frame 1150 can form a venting path, and high-temperature gas and/or flame moving along the venting path may be cooled in contact with the inner surface of the direction adjustment part 2100, and gas and/or flame cooled by the discharge port 2300 can be safely discharged to the outside. Therefore, the safety of the battery pack 1000 can be improved.

The above-mentioned battery module and battery pack including the same can be applied to various devices. Such devices can be applied to vehicle means such as an electric bike, an electric vehicle, and a hybrid electric vehicle, but the present disclosure is not limited thereto, and also can be applied to various devices capable of using the battery module and the battery pack including the same, which falls within the scope of the present disclosure.

The invention has been described in detail above with reference to preferred embodiments thereof. However, it will be appreciated by those skilled in the art that the scope of the present disclosure is not limited thereto, and various modifications and improvements can be made in these embodiment without departing from the principles and sprit of the invention, the scope of which is defined in the appended claims and their equivalents.

### [Description of Reference Numerals]

100: battery module
100a: first sub-module
100b: second sub-module
120: battery cell assembly
130a, 130b, 130a1, 130a2, 130b1, 130b2: electrode leads
200: module housing
200D: step part
210a: cooling fin
230: side plate
300: busbar structure
315: terminal assembly
320: terminal housing
325: connection member
327: coupling member
328: fixing member
330: busbar
340: terminal busbar
340h1, 340h2: first hole, second hole
200DH: third hole
350: flexible printed circuit board
360: sensing unit
363: sensing cable
380: connection cable
400: sealing assembly
421: inlet
430: module connector
440: coupling member
461: outlet
471: venting hole
472: module connection part
473: membrane
A3: module extension part
1100: lower pack frame
1110: internal beam
1150: side surface pack frame
2000: pack venting part
2100: direction adjustment part
2200: pack connection part
2300: discharge port

## Claims

1. A battery module comprising:
a first sub-module and a second sub-module which each include a battery cell assembly in which a plurality of battery cells are stacked, and a busbar structure including a busbar electrically connecting the battery cells and a busbar frame covering the battery cell assembly on at least one side,
a module housing that simultaneously houses the first sub-module and the second sub-module, and
a terminal assembly located in a part of the module housing that overlaps with a module extension part where the first sub-module and the second sub-module face each other.

2. The battery module according to claim 1, wherein:
a step part is formed in a part of the module housing where the terminal assembly is located.

3. The battery module according to claim 2, wherein:
the terminal assembly is mounted on the step part.

4. The battery module according to claim 1, wherein:
the terminal assembly comprises a terminal housing, and a terminal busbar mounted on the terminal housing.

5. The battery module according to claim 4, wherein:
the terminal housing is formed with a first hole, the terminal busbar is formed with a second hole, and the step part is formed with a third hole, and
the battery module further comprises a coupling member that passes through the first hole, the second hole and the third hole.

6. The battery module according to claim 5, wherein:
the coupling member is formed of a conductive material, and a first internal busbar of the first sub-module or a second internal busbar of the second sub-module and the terminal busbar are electrically connected by the coupling member.

7. The battery module according to claim 6, wherein:
the terminal busbar comprises a first terminal busbar and a second terminal busbar, wherein the first terminal busbar and the second terminal busbar have different polarities from each other.

8. The battery module according to claim 7, wherein:
the coupling member comprises a first coupling member and a second coupling member,
wherein the first coupling member electrically connects the first terminal busbar and the first internal busbar of the first sub-module, and the second coupling member electrically connects the second terminal busbar and the second internal busbar of the second sub-module.

9. The battery module according to claim 4, wherein:
the terminal housing has a bent shape so as to wrap around a side edge of the module housing.

10. The battery module according to claim 1,
further comprising a sealing assembly that covers both open ends of the module housing, respectively.

11. The battery module according to claim 10, wherein:
the sealing assembly comprises a first sealing assembly covering one open end of the module housing, and a second sealing assembly covering the other open end of the module housing,
the first sealing assembly comprises an outlet, which is a hole through which coolant is discharged, and
the second sealing assembly comprises an inlet, which is a hole through which coolant flows in.

12. The battery module according to claim 11, wherein:
the outlet is located at an upper part than a center part on the basis of the height of the first sealing assembly, and
the inlet is located at a lower part than a center part on the basis of the height of the second sealing assembly.

13. The battery module according to claim 12, wherein:
the coolant is in direct contact with the battery cell assembly and the busbar structure housed inside the module housing, and
the coolant is an insulating oil.

14. The battery module according to claim 11, wherein:
a first sealing member is interposed along one edge of the sealing assembly coupled with the one open end of the module housing.

15. The battery module according to claim 14,
comprising a second sealing member interposed in a gap existing in the area excluding an edge of the sealing assembly.

16. The battery module according to claim 15,
comprising a third sealing member interposed along edges of the sealing assembly and the end plate.

17. The battery module according to claim 10, wherein:
the sealing assembly comprises a module venting part provided in one area of the sealing assembly,
the module venting part comprises,
a venting hole passing through the sealing assembly,
a module connection part, which is one hole communicating with the venting hole,
a fixing cover provided between the venting hole and the busbar structure and fixed in contact with the inner surface of the sealing assembly, and
a membrane provided between the venting hole and the fixing cover, and fixed in contact with the fixing cover.

18. The battery module according to claim 17, wherein:
the module connection part protrudes from the sealing assembly in a direction opposite to the module housing, and
the battery module further comprises a venting protrusion part, which is one area surrounding the module connection part and protruding from the sealing assembly in a direction opposite to the module housing.

19. The battery module according to claim 18, wherein:
the end plate covering the module connection part and the sealing assembly provided with the venting protrusion part includes a venting opening, and
the venting opening is a hole passing through the end plate, and the module connection part and the venting protrusion part are located while passing through the venting opening.

20. The battery module according to claim 1, wherein:
the module extension part comprises a portion where electrode leads are electrically connected to each other in the first sub-module; and a portion where the electrode leads are electrically connected to each other in the second sub-module.

21. A battery pack comprising:
a plurality of the battery modules according to claim 1,
wherein the battery module further comprises a sealing assembly that covers both open ends of the module housing, respectively.

22. The battery pack according to claim 21, further comprising:
an internal beam arranged between a first battery module and a second battery module that are adjacent to each other in a direction perpendicular to a direction in which the first sub-module and the second sub-module are arranged,
wherein the terminal assembly is arranged so as to overlap with the internal beam in a vertical direction.

23. The battery pack according to claim 22, wherein:
the terminal assembly is arranged in the upper space of the internal beam.

24. The battery pack according to claim 22, wherein:
the terminal assembly comprises a first terminal assembly located on the first battery module and a second terminal assembly located on the second battery module, and
the battery pack further comprises a connection member that connects the first terminal assembly and the second terminal assembly.

25. The battery pack according to claim 24, wherein:
the first terminal assembly and the second terminal assembly each comprises a terminal housing and a terminal busbar mounted on the terminal housing,
the first terminal assembly is formed with different terminal busbars from each other, the second terminal assembly is formed with different terminal busbars from each other, and a first terminal busbar of the first terminal assembly and a second terminal busbar of the second terminal assembly are electrically connected through the connection member, and
the first terminal busbar and the second terminal busbar have different polarities from each other.

26. The battery pack according to claim 20,
further comprising a pack venting part connected to the battery module.

27. The battery pack according to claim 26,
the pack venting part comprises,
a pack connection part connected to the battery module,
a direction adjustment part which is a pipe communicating with the pack connection part, and
a discharge port provided in one area of the side surface pack frame and connected to the direction adjustment part.

28. The battery pack according to claim 27, wherein:
the direction adjustment part is located inside the side surface pack frame,
one end of the direction adjustment part is closed, and the other end of the direction adjustment part is connected to the discharge port, and
the pack connection part is one area protruding from one surface of the direction adjustment part toward the battery module.

29. The battery pack according to claim 28, wherein:
the pack connection part is located while passing through one surface of the side surface pack frame.

30. The battery pack according to claim 28, wherein:
the pack connection part is connected to the module connection part of the battery module, and
the module connection part is a hole that communicates with the inside of the battery module.
